# EUROPÄISCHE PATENTSCHRIFT

(11) **EP 4 120 032 B1**
(45) Veröffentlichungstag und Bekanntmachung des Hinweises auf die Patenterteilung: **07.01.2026**
(21) Anmeldenummer: 21185775.0
(22) Anmeldetag: 15.07.2021
(51) Int. Cl.: G05B 19/042, G01F 23/00, G06F 9/445

(54) **VERFAHREN UND VORRICHTUNG ZUM KONFIGURIEREN EINES FÜLLSTANDANZEIGEGERÄTS ODER FÜLLSTANDMESSGERÄTS**
METHOD AND DEVICE FOR CONFIGURING A FILL LEVEL INDICATOR OR FILL LEVEL MEASURING DEVICE
PROCÉDÉ ET DISPOSITIF DE CONFIGURATION D'UN APPAREIL D'AFFICHAGE DE NIVEAU DE REMPLISSAGE OU D'UN APPAREIL DE MESURE DE NIVEAU DE REMPLISSAGE

(43) Veröffentlichungstag der Anmeldung: 18.01.2023
(73) Patentinhaber: VEGA Grieshaber KG, 77709 Wolfach (DE)
(72) Erfinder: ROMING, Ansgar, 78733 Aichhalden (DE); MOSER, Reto, 8934 Knonau (CH)
(74) Vertreter: Maiwald GmbH

(56) Entgegenhaltungen:
- DE-A1- 102013 218 971
- VEGA GRIESHABER KG: "Kontinuierliche F�llstandsmessung mit F�llstandssensoren", 7 May 2021 (2021-05-07), XP002805000, Retrieved from the Internet <URL:https://web.archive.org/web/20210507131724/https://www.vega.com/de-de/produkte> [retrieved on 20211208]
- EMERSON: "Products - Continuous level measurement � Emerson", 19 April 2021 (2021-04-19), XP002805001, Retrieved from the Internet <URL:https://web.archive.org/web/20210419193328/https://www.emerson.com/en-us/catalog/continuous-level-measurement> [retrieved on 20211208]
- KROHNE MESSTECHNIK GMBH: "Level measurement � Krohne Group", 25 February 2021 (2021-02-25), XP002805002, Retrieved from the Internet <URL:https://web.archive.org/web/20210225130932/https://krohne.com/en/products/level-measurement/> [retrieved on 20211208]
- ENDRESS ET AL: "Applicator Help Pages of Sizing Bypass Solutions Content", 1 March 2020 (2020-03-01), pages 1 - 16, XP055871089, Retrieved from the Internet <URL:https://usermanual.wiki/m/acaa64825bb4cfcbea139a9dc395c0fad51bbd38db9ea1165c9cb44e501828d9.pdf> [retrieved on 20211209]

## Beschreibung

### Gebiet der Erfindung

Die Erfindung betrifft allgemein das Gebiet der Füllstandmessung. Im Speziellen betrifft die Erfindung ein computer-implementiertes Verfahren sowie eine Datenverarbeitungsvorrichtung zum Konfigurieren eines Messgeräts, insbesondere eines Füllstandanzeigegeräts oder Füllstandmessgeräts. Ferner betrifft die Erfindung ein mit dem Verfahren konfiguriertes und/oder hergestelltes Füllstandanzeigegerät oder Füllstandmessgerät, die Verwendung der Datenverarbeitungsvorrichtung zum Konfigurieren eines Füllstandanzeigegeräts oder Füllstandmessgeräts, ein Programmelement zum Durchführen des Verfahrens und ein computerlesbares Medium mit einem solchen Programmelement.

### Hintergrund

In der Automatisierungstechnik werden Feldgeräte oder Messgeräte mit Sensoren, wie beispielsweise Füllstandsensoren oder Füllstandanzeigegerät oder Füllstandmessgeräte, in oder an einer Vielzahl von unterschiedlichen Behältern mit unterschiedlichen Geometrien sowie in einer Vielzahl von unterschiedlichen Anlagen mit unterschiedlichen Prozessen eingesetzt. Häufig werden Füllstandanzeigegerät oder Füllstandmessgeräte dabei zum Ermitteln eines Füllstands und/oder Grenzstands eines Mediums in einem Behälter eingesetzt.

Die in den jeweiligen Prozessanlagen verwendeten Behälter, darin befindliche Mengen oder Arten von Medien, die Zusammensetzung eines Mediums, zu verarbeitende Mengen von Medium sowie die Prozessbedingungen zur Verarbeitung einer oder mehrerer Medien in einem Behälter, wie beispielsweise eine Temperatur und/oder ein Druck, sind in der Regel an individuelle Anforderungen des jeweiligen Prozesses angepasst.

Aufgrund der unterschiedlichen Prozesse, der damit einhergehenden unterschiedlichen Anforderungen sowie der unterschiedlichen Einsatzbereiche von Füllstandanzeigegeräten oder Füllstandmessgeräten in der Prozessautomation, werden Füllstandanzeigegeräte oder Füllstandmessgeräte häufig speziell an den jeweiligen Prozess angepasst. Dies kann beispielsweise eine Anpassung und/oder Konfiguration des Füllstandanzeigegeräts oder Füllstandmessgeräts hinsichtlich Funktionsumfang, Funktion, Funktionalität, Geometrie und/oder Struktur erfordern. Die eigentliche Anpassung und Konfiguration von Füllstandanzeigegeräten oder Füllstandmessgeräten, insbesondere im Rahmen eines Angebotes oder einer Bestellung durch einen Benutzer und einer entsprechenden Fertigung des Füllstandanzeigegerät oder Füllstandmessgerät, kann dabei arbeitsintensiv und damit kostenintensiv ausfallen.

In DE102013218971A1 wird ein Füllstandmessgeräteparametriersystem zur Konfiguration und/oder Parametrierung eines Füllstandmessgeräts vorgeschlagen, das einen Benutzerrechner und einen Zentralrechner aufweist. Der Benutzerrechner erzeugt auf Basis von Benutzereingaben Konfigurationsanweisungen und Parametrieranweisungen und der Zentralrechner erzeugt darauf basierend zumindest einen Teil einer Konfigurationsinformation und/oder Parametrierinformation für ein Füllstandmessgerät. Der Zentralrechner ist weiterhin konfiguriert, dem Benutzerrechner Steuerinformationen zum Bereitstellen der Benutzerschnittstelle zu übermitteln. Die Internetpublikation "Kontinuierliche Füllstandsmessung mit Fülllstandssensoren" der Vega Grieshaber KG vom 7. Mai 2021 zeigt eine Benutzeroberfläche zur Auswahl eines Sensors basierend auf Benutzereingaben, wie die Auswahl der gewünschten Sensorart. Bereits vorkonfigurierte Sensoren werden dem Benutzer angezeigt. Eine benutzerspezifische Konfiguration ist nicht gegeben.

### Zusammenfassung der Erfindung

Mit Ausführungsform der Erfindung kann in vorteilhafter Weise ein verbessertes computer-implementiertes Verfahren sowie eine entsprechende Datenverarbeitungsvorrichtung zum Konfigurieren eines Füllstandanzeigegeräts oder Füllstandmessgeräts bereitgestellt werden. Insbesondere kann damit eine Fertigung des Füllstandanzeigegeräts oder Füllstandmessgeräts optimiert werden.

Dies wird insbesondere durch die Merkmale der unabhängigen Patentansprüche ermöglicht. Weiterbildungen der Erfindung ergeben sich aus den Unteransprüchen und der folgenden Beschreibung.

Ein erster Aspekt der vorliegenden Offenbarung betrifft ein computer-implementiertes Verfahren zum Konfigurieren eines Füllstandanzeigegeräts oder Füllstandmessgeräts. Das Füllstandanzeigegerät oder Füllstandmessgerät kann dabei zum Ermitteln und/oder Anzeigen eines Füllstands und/oder Grenzstandes eines Mediums, insbesondere eines Mediums in einem Behälter, eingerichtet sein. Ein Füllstandanzeigegerät kann beispielsweise mit einer weiteren Vorrichtung operativ und/oder kommunikativ koppelbar sein, wobei das Füllstandanzeigegerät selbst den Füllstand ermitteln kann oder entsprechende Daten von der weiteren Vorrichtung zur Anzeige des Füllstands erhalten kann. Das Füllstandanzeigegerät oder Füllstandmessgerät kann somit ein Grenzstandmessgerät bezeichnen. Das Verfahren weist folgende Schritte auf:
- Bereitstellen, Empfangen und/oder Verarbeiten, an einer Datenverarbeitungsvorrichtung, eines Spezifikationsdatensatzes, welcher wenigstens eine Spezifikation des Füllstandanzeigegeräts oder Füllstandmessgeräts bezüglich wenigstens einer benutzerdefinierten Anforderung an das Füllstandanzeigegerät oder Füllstandmessgerät, wenigstens eines Attributs des Füllstandanzeigegeräts oder Füllstandmessgeräts und/oder wenigstens eines für das Füllstandanzeigegerät oder Füllstandmessgerät vorgesehenen Einsatzbereiches aufweist;
- Analysieren und/oder Verarbeiten, mit der Datenverarbeitungsvorrichtung, der wenigstens einen in dem Spezifikationsdatensatz enthaltenen Spezifikation des Füllstandanzeigegeräts oder Füllstandmessgeräts unter Generieren, Berechnen, Ermitteln und/oder Erstellen eines Konfigurationsdatensatzes zur Konfiguration des Füllstandanzeigegeräts oder Füllstandmessgeräts, wobei der Konfigurationsdatensatz eine Geometrie, Form, Struktur und/oder Funktion des Füllstandanzeigegeräts oder Füllstandmessgeräts derart definiert, dass das Füllstandanzeigegerät oder Füllstandmessgerät basierend auf dem Konfigurationsdatensatz graphisch darstellbar und/oder fertigbar ist,

Erzeugen, mit der Datenverarbeitungsvorrichtung basierend auf dem Konfigurationsdatensatz, einer graphischen Darstellung, insbesondere einer 3D-Darstellung, des Füllstandanzeigegeräts oder Füllstandmessgeräts zur Ausgabe an einer Benutzerschnittstelle.

Anhand einer oder mehrerer Spezifikationen, welche beispielsweise einer oder mehreren Vorgaben für die Konfiguration des Füllstandanzeigegeräts oder Füllstandmessgeräts entsprechen können, kann der Konfigurationsdatensatz durch die Datenverarbeitungsvorrichtung generiert werden. Der Konfigurationsdatensatz kann dabei alle für eine graphische Darstellung und/oder Fertigung des Füllstandanzeigegeräts oder Füllstandmessgeräts relevanten Informationen enthalten. Insbesondere kann der Konfigurationsdatensatz das Füllstandanzeigegerät oder Füllstandmessgerät vollständig hinsichtlich dessen Geometrie, Form, Struktur und/oder Funktion definieren, dass das Füllstandanzeigegerät oder Füllstandmessgerät basierend auf dem Konfigurationsdatensatz fertigbar und/oder herstellbar ist. Das Generieren des Konfigurationsdatensatzes kann beispielsweise mittels Analysieren des Spezifikationsdatensatzes und/oder mittels einer oder mehrerer Berechnungen basierend auf dem Spezifikationsdatensatzes erfolgen.

Der Spezifikationsdatensatz kann beispielsweise eine oder mehrere Spezifikationen des Füllstandanzeigegeräts oder Füllstandmessgeräts festlegen und die Datenverarbeitungsvorrichtung kann basierend darauf den Konfigurationsdatensatz bestimmen, welcher die wenigstens eine Spezifikation des Füllstandanzeigegeräts oder Füllstandmessgeräts berücksichtigen und/oder widerspiegeln kann. Insbesondere kann der Konfigurationsdatensatz dabei die Geometrie, Form, Struktur und/oder Funktion des Füllstandanzeigegeräts oder Füllstandmessgeräts derart definieren, dass die wenigstens eine Spezifikation des Spezifikationsdatensatzes durch das Füllstandanzeigegerät oder Füllstandmessgerät erfüllt ist und/oder erfüllbar ist. Der Konfigurationsdatensatz kann dabei eines oder mehrere Datenelemente enthalten, welche die Geometrie, Form, Struktur und/oder die Funktion des Füllstandanzeigegeräts oder Füllstandmessgeräts definieren.

Gemäß der vorliegenden Offenbarung kann die Geometrie, Form und/oder die Struktur des Füllstandanzeigegeräts oder Füllstandmessgeräts beispielsweise eine Abmessung des Füllstandanzeigegeräts oder Füllstandmessgeräts (und/oder wenigstens einer Komponente des Füllstandanzeigegeräts oder Füllstandmessgeräts), eine Größe des Füllstandanzeigegeräts oder Füllstandmessgeräts (und/oder wenigstens einer Komponente des Füllstandanzeigegeräts oder Füllstandmessgeräts), eine Angabe einer oder mehrerer Komponenten des Füllstandanzeigegeräts oder Füllstandmessgeräts, eine Anzahl einer oder mehrerer Komponenten des Füllstandanzeigegeräts oder Füllstandmessgeräts oder dergleichen umfassen. Alternativ oder zusätzlich kann "die Funktion" des Füllstandanzeigegeräts oder Füllstandmessgeräts gemäß der vorliegenden Offenbarung einen Funktionsumfang des Füllstandanzeigegeräts oder Füllstandmessgeräts und/oder eine oder mehrere Funktionalitäten, welche das Füllstandanzeigegerät oder Füllstandmessgerät bereitstellt, umfassen.

Das erfindungsgemäße Verfahren kann insbesondere ein Angebot, eine Fertigung, eine Bestellung, einen Bestellvorgang und/oder eine Herstellung des Füllstandanzeigegeräts oder Füllstandmessgeräts vereinfachen und/oder beschleunigen, insbesondere da eine arbeits- und zeitintensive Bestimmung der Geometrie, Form, Struktur und/oder Funktion des Füllstandanzeigegeräts oder Füllstandmessgeräts durch Personal entfallen kann. Dies kann ferner eine kosteneffiziente Fertigung und Konfiguration des Füllstandanzeigegeräts oder Füllstandmessgeräts ermöglichen. Die vorliegende Erfindung kann mitunter zur Fertigung und/oder Konfiguration verschiedener Messgeräte und/oder Feldgeräte, wie beispielsweise Füllstandanzeigegeräte und/oder Füllstandmessgeräte, Druckmessgeräte, Durchflussmessgeräte oder dergleichen, in vorteilhafter Weise eingesetzt werden. Die vorliegende Offenbarung gilt somit gleichermaßen für Feldgeräte im Allgemeinen.

Bei der Datenverarbeitungsvorrichtung kann es sich allgemein um eine Logikeinheit zur Datenverarbeitung handeln. Die Datenverarbeitungsvorrichtung kann dabei einen oder mehrere Prozessoren zur Datenverarbeitung aufweisen. Die Datenverarbeitungsvorrichtung kann beispielsweise einen oder mehrere Computer, beispielsweise einen oder mehrere Standalone-Rechner oder wenigstens einen Server umfassen. Alternativ oder zusätzlich kann die Datenverarbeitungsvorrichtung auch ein mobiles Endgerät, beispielsweise einen PC, ein Notebook, ein Tablet, ein Smartphone oder dergleichen bezeichnen.

Bei dem Spezifikationsdatensatz kann es sich im Allgemeinen um einen Datensatz handeln, welcher wenigstens eine Spezifikation eines Füllstandanzeigegeräts oder Füllstandmessgeräts umfasst, beispielsweise durch Angabe eines oder mehrerer Merkmale, Besonderheiten und/oder Charakteristika. Der Spezifikationsdatensatz kann auch als Basis-Dateneingabedatensatz bezeichnet werden. Mit dem Spezifikationsdatensatz kann beispielsweise ein Benutzer ein erwünschtes oder benötigtes Füllstandanzeigegerät oder Füllstandmessgerät definieren, beschreiben und/oder spezifizieren. Der Spezifikationsdatensatz kann eine benutzerdefinierte, vorbestimmte, vordefinierte Anforderung an das Füllstandanzeigegerät oder Füllstandmessgerät, ein Attribut des Füllstandanzeigegeräts oder Füllstandmessgeräts und/oder einen für das Füllstandanzeigegerät oder Füllstandmessgerät vorgesehenen Einsatzbereich aufweisen. Bei dem Einsatzbereich kann es sich beispielsweise um die Angabe oder Definition eines für das Füllstandanzeigegerät oder Füllstandmessgerät vorgesehenen Prozesses und/oder um die Angabe einer oder mehrerer Prozessbedingungen handeln. Beispielsweise kann der Spezifikationsdatensatz in diesem Zusammenhang eine Einsatztemperatur für das Füllstandanzeigegerät oder Füllstandmessgerät, eine Temperatur für den Prozess, einen Prozessdruck, eine geographische Position des Einsatzortes, einen spezifischen Einsatzbehälter, eine Einbaugeometrie für den Einbau des Füllstandanzeigegeräts oder Füllstandmessgeräts in oder an einem Behälter, und/oder ein zu messendes Medium aufweisen.

Der Konfigurationsdatensatz kann als Ergebnis des Analysierens des Spezifikationsdatensatzes angesehen werden. Es sei bemerkt, dass der Konfigurationsdatensatz sich z.B. hinsichtlich Datenformat und/oder Informationsgehalt von Spezifikationsdatensatz unterscheiden kann. Der Konfigurationsdatensatz kann im Allgemeinen ein Datensatz sein, welcher zur tatsächlichen Konfiguration und/oder zur Fertigung des Füllstandanzeigegeräts oder Füllstandmessgeräts dienen kann. Der Konfigurationsdatensatz kann beispielsweise Designinformationen zur Fertigung des physikalischen Füllstandanzeigegeräts oder Füllstandmessgeräts umfassen. Ferner kann der Konfigurationsdatensatz Konfigurationsdaten umfassen, welche zur Konfiguration beispielsweise einer Messeinheit des Füllstandanzeigegeräts oder Füllstandmessgeräts eingerichtet sein können. Alternativ oder zusätzlich kann der Konfigurationsdatensatz Konfigurationsdaten zur Angabe einer Art, Größe, Anzahl, eines Designs und/oder einer Konfiguration einer oder mehrerer Antennen und/oder anderen Komponenten des Füllstandanzeigegeräts oder Füllstandmessgeräts, wie etwa Magnetschaltern, enthalten. Der Konfigurationsdatensatz kann zumindest teilweise basierend auf Spezifikationsdatensatz ermittelt, berechnet und/oder bestimmt werden, insbesondere mittels der Datenverarbeitungsvorrichtung ermittelt, berechnet und/oder bestimmt werden, und/oder davon abgeleitet werden.

Der Begriff "graphisch darstellbar" ist im Kontext der vorliegenden Offenbarung breit zu verstehen. Es kann sich um eine Zeichnung, um eine Schnittdarstellung des Füllstandanzeigegeräts oder Füllstandmessgeräts und/oder um eine Übersicht der geometrischen Maße des Füllstandanzeigegeräts oder Füllstandmessgeräts handeln.

Durch das offenbarungsgemäße Verfahren kann beispielsweise die Generierung einer graphischen Darstellung des Füllstandanzeigegeräts oder Füllstandmessgeräts, wie etwa eine CAD-Zeichnung, mittels wenigen Interaktionen von einem Benutzer innerhalb kurzer Zeit, insbesondere ohne weitere Fachmann-Ressourcen, erfolgen.

Gemäß einer Ausführungsform weist das Verfahren ferner ein Erzeugen, mit der Datenverarbeitungsvorrichtung basierend auf dem Konfigurationsdatensatz, einer graphischen Darstellung, insbesondere einer 3D-Darstellung, des Füllstandanzeigegeräts oder Füllstandmessgeräts zur Ausgabe an einer Benutzerschnittstelle auf.

Bei der Benutzerschnittstelle kann es sich um einen Monitor, ein Mobilgerät, ein Display oder dergleichen handeln. Es ist denkbar, insbesondere bei einer 3D-Drastellung des Füllstandanzeigegeräts oder Füllstandmessgeräts, dass verschiedene Perspektiven, Ausschnitte und/oder Bereiche des Füllstandanzeigegeräts oder Füllstandmessgeräts im Detail graphisch dargestellt werden können. Über die Ausgabe an einer Benutzerschnittstelle kann ein Benutzer das Füllstandanzeigegerät oder Füllstandmessgerät, welches beispielsweise die benutzerdefinierte Anforderung erfüllt, optisch inspizieren und möglicherweise überprüfen, ob die graphische Darstellung des Füllstandanzeigegeräts oder Füllstandmessgeräts den Erwartungen, Anforderungen, und/oder Voraussetzungen des Benutzers entsprechen. Somit kann zum Beispiel der Benutzer anhand der graphischen Darstellung des Füllstandanzeigegeräts oder Füllstandmessgeräts überprüfen, ob der Benutzer den Spezifikationsdatensatz anpassen und/oder vervollständigen möchte und/oder sollte.

Es ist zudem denkbar, dass die Dimensionen, Abmessungen und/oder technische Maße des Füllstandanzeigegeräts oder Füllstandmessgeräts in der graphischen Darstellung des Füllstandanzeigegeräts oder Füllstandmessgeräts ablesbar und/oder einblendbar sind.

Gemäß einer Ausführungsform weist das Verfahren ferner ein Ansteuern, mit der Datenverarbeitungsvorrichtung, einer Benutzerschnittstelle zur Ausgabe einer Benutzeroberfläche mit wenigstens einem durch einen Benutzer anpassbaren Bedienelement auf. Mit anderen Worten kann die Datenverarbeitungsvorrichtung dazu eingerichtet sein, eine Benutzerschnittstelle derart anzusteuern, dass an der Benutzerschnittstelle eine Benutzeroberfläche ausgegeben und/oder angezeigt wird. Durch Ausgabe der Benutzeroberfläche und Anzeige des wenigstens einen Bedienelements kann dem Benutzer die Möglichkeit zur Eingabe, Modifikation und/oder Anpassung des Spezifikationsdatensatzes und/oder der wenigsten einen Spezifikation bereitgestellt werden.

Bei der Benutzeroberfläche kann es sich beispielsweise um eine graphische Benutzeroberfläche (graphical user interface, GUI) handeln, wie etwa ein Eingabefenster an der Benutzerschnittstelle. Der Benutzer kann beispielsweise eine oder mehrere Spezifikationen des Füllstandanzeigegeräts oder Füllstandmessgeräts über ein oder mehrere Bedienelemente der Benutzeroberfläche festlegen, variieren, anpassen und/oder modifizieren. Die Datenverarbeitungsvorrichtung kann die wenigstens eine Spezifikation in einen Spezifikationsdatensatz wandeln und/oder überführen. Ferner kann die Datenverarbeitungsvorrichtung den Konfigurationsdatensatz ermitteln und optional das gemäß dem Konfigurationsdatensatz ermittelte Füllstandanzeigegerät oder Füllstandmessgerät in der Benutzeroberfläche an der Benutzerschnittstelle graphisch darstellen und/oder visualisieren. Dem Benutzer kann so eine Modifikation eines der Bedienelemente auch graphisch dargestellt werden. Dies kann eine intuitive und vollumfängliche Konfiguration des Füllstandanzeigegeräts oder Füllstandmessgeräts ermöglichen. Alternativ oder zusätzlich kann zumindest ein Teil des Konfigurationsdatensatzes an der Benutzeroberfläche dargestellt und/oder ausgegeben werden, etwa um dem Benutzer weitere Informationen bezüglich der Konfiguration bereitzustellen. Optional kann auch eine Fehlermeldung, Warnung und/oder eine Nachricht ausgegeben werden, beispielsweise wenn eine Fehlkonfiguration von der Datenverarbeitungsvorrichtung ermittelt wird, etwa aufgrund in Widerspruch zueinander stehender Spezifikationen des Füllstandanzeigegeräts oder Füllstandmessgeräts und/oder aufgrund einer nicht eingehaltenen Norm oder Regel.

Die wenigstens eine Spezifikation des Füllstandanzeigegeräts oder Füllstandmessgeräts ist basierend auf einer Anpassung des wenigstens einen Bedienelements durch den Benutzer festlegbar. Alternativ oder zusätzlich wird der Spezifikationsdatensatz mit der wenigstens einen Spezifikation des Füllstandanzeigegeräts oder Füllstandmessgeräts zumindest teilweise basierend auf einer Benutzereingabe über das wenigstens eine Bedienelement erstellt. Der Spezifikationsdatensatz kann hierbei von einer externen Datenverarbeitungseinrichtung, beispielsweise einem Computer, einem Mobilgerät oder dergleichen, erstellt und an die Datenverarbeitungsvorrichtung übermittelt werden. Beispielsweise kann die Datenverarbeitungsvorrichtung den Spezifikationsdatensatz von der externen Datenverarbeitungsvorrichtung über eine Kommunikationsschnittstelle empfangen. Alternativ kann die Datenverarbeitungsvorrichtung selbst den Spezifikationsdatensatz basierend auf der Benutzereingabe bestimmen, berechnen und/oder ermitteln.

Das Bereitstellen des Spezifikationsdatensatzes kann daher beispielsweise ein Bereitstellen in einem Datenspeicher der Datenverarbeitungsvorrichtung und/oder ein Bereitstellen des Spezifikationsdatensatzes an einen oder mehrere Prozessoren der Datenverarbeitungsvorrichtung umfassen. Alternativ oder zusätzlich kann das Bereitstellen des Spezifikationsdatensatzes ein Übermitteln und/oder Empfangen des Spezifikationsdatensatzes über eine Kommunikationsschnittstelle der Datenverarbeitungsvorrichtung umfassen.

Gemäß einer Ausführungsform wird die Benutzerschnittstelle über ein Webinterface zur Anzeige der Benutzeroberfläche durch die Datenverarbeitungsvorrichtung angesteuert. Alternativ oder zusätzlich wird die Benutzeroberfläche über ein Webinterface an der Benutzerschnittstelle bereitgestellt. Dadurch kann wenigstens ein Server als Datenverarbeitungsvorrichtung dienen und beliebig viele Benutzer können über entsprechende Webinterfaces die Konfiguration eines oder mehrerer Füllstandanzeigegeräte oder Füllstandmessgeräte vornehmen, insbesondere gleichzeitig vornehmen.

Mit anderen Worten, kann der Benutzer beispielsweise über das Internet eine graphische Darstellung des Füllstandanzeigegeräts oder Füllstandmessgeräts erhalten und eine Konfiguration vornehmen. Es ist ebenso denkbar, dass ein Benutzer somit an verschiedenen Arbeitsstationen die graphische Darstellung des Füllstandanzeigegeräts oder Füllstandmessgeräts, welche basierend auf dem Konfigurationsdatensatz erzeugt worden sein kann, abrufen kann. Beispielsweise können hierfür entsprechende Benutzerkonten auf der Datenverarbeitungsvorrichtung vorgesehen sein.

Gemäß einer Ausführungsform umfasst das Bereitstellen des Spezifikationsdatensatzes folgendes:
- Empfangen und/oder Verarbeiten einer Benutzereingabe über wenigstens ein an einer Benutzeroberfläche durch die Datenverarbeitungsvorrichtung bereitgestelltes Bedienelement; und
- Generieren des Konfigurationsdatensatzes und/oder des Spezifikationsdatensatzes zumindest teilweise basierend auf der Benutzereingabe.

Ein Benutzer kann beispielsweise durch Bedienen, Anpassen, Steuern und/oder Modifizieren des Bedienelements eine Benutzereingabe tätigen, welche die Datenverarbeitungsvorrichtung in dem Spezifikationsdatensatz und/oder dem Konfigurationsdatensatz berücksichtigen kann.

Die Datenverarbeitungsvorrichtung kann beispielsweise dazu eingerichtet sein, in Antwort auf eine Benutzereingabe den Konfigurationsdatensatz und/oder eine graphische Darstellung des Füllstandanzeigegeräts oder Füllstandmessgeräts anzupassen, zu verändern und/oder zu modifizieren.

Gemäß einer Ausführungsform ist das wenigstens eine Bedienelement ein graphisches Bedienelement. Das Bedienelement kann beispielsweise über eine Eingabevorrichtung, etwa eine Maus, ein Touch-Pad und/oder eine Tastatur, an einer Benutzerschnittstelle durch den Benutzer angepasst werden. Dies kann eine intuitive, schnelle, effiziente und umfassende Konfiguration des Füllstandanzeigegeräts oder Füllstandmessgeräts ermöglichen.

Gemäß einer Ausführungsform umfasst das wenigstens eine Bedienelement einen Schiebregler, ein graphisch bedienbares Regelelement, ein Dropdownmenü, einen Auswahlregler und/oder einen Drehregler. Es sind jedoch auch beliebige andere Bedienelemente und Filterelemente denkbar.

Somit kann ein Benutzer beispielsweise eine Prozesstemperatur und/oder einen Prozessdruck durch Schieben eines Schiebreglers anpassen und/oder angeben. Ebenso ist denkbar, dass der Benutzer aus einer Auswahl an Möglichkeiten über ein Dropdownmenü eine Möglichkeit für eine Spezifikation des Füllstandanzeigegeräts oder Füllstandmessgeräts auswählen kann. Alternativ oder zusätzlich kann beispielsweise eine Flanschgröße, ein Flanschdurchmesser, die Länge eines Bypassrohrs, ein Anstellwinkel des Füllstandanzeigegeräts oder Füllstandmessgeräts oder beliebige andere Parameter durch eines oder mehrere Bedienelemente festgelegt werden, wie unter anderem nachfolgend erläutert.

Gemäß einer Ausführungsform umfasst der Spezifikationsdatensatz wenigstens ein Element ausgewählt aus der folgenden Gruppe:
Einer Prozesstemperatur, einem Prozesstemperaturbereich, einem Durchmesser eines Prozessanschlusses des Füllstandanzeigegeräts oder Füllstandmessgeräts, einem Prozessdruck, einem Prozessdruckbereich, einer Festigkeit eines oder mehrerer Anschlussbereiche des Füllstandanzeigegeräts oder Füllstandmessgeräts, einem Durchmesser eines oder mehrerer Anschlussrohre des Füllstandanzeigegeräts oder Füllstandmessgeräts, einem Durchmesser eines Bypassrohrs des Füllstandanzeigegeräts oder Füllstandmessgeräts, einer Wandstärke eines oder mehrerer Anschlussbereiche des Füllstandanzeigegeräts oder Füllstandmessgeräts, einer Anzahl von Prozessanschlüsse des Füllstandanzeigegeräts oder Füllstandmessgeräts , einer Anzahl von Querverbindungen des Füllstandanzeigegeräts oder Füllstandmessgeräts zur Verbindung eines Bypassrohrs des Füllstandanzeigegeräts oder Füllstandmessgeräts mit einer Wand , einem Abstand zwischen zwei Querverbindungen des Füllstandanzeigegeräts oder Füllstandmessgeräts zur Verbindung eines Bypassrohrs des Füllstandanzeigegeräts oder Füllstandmessgeräts mit einer Wand; und/oder einer Anzahl von Magnetschaltern des Füllstandanzeigegeräts oder Füllstandmessgeräts.

Es sei bemerkt, dass der Spezifikationsdatensatz weitere Spezifikationen, Merkmale, und/oder Charakteristika des Füllstandanzeigegeräts oder Füllstandmessgeräts umfassen kann. Es sei ferner bemerkt, dass ein Prozessanschluss des Füllstandanzeigegeräts oder Füllstandmessgeräts auch als Anschlussstutzen und Befestigungsstutzen bezeichnet werden kann.

Eine oder mehrere der voranstehend genannten Spezifikationen kann ein Benutzer beispielsweise durch Betätigen eines oder mehrerer Bedienelemente an der Benutzeroberfläche festlegen. Die Datenverarbeitungsvorrichtung kann sodann den Spezifikationsdatensatz basierend auf den definierten Spezifikationen erstellen und den Konfigurationsdatensatz berechnen.

Gemäß einer Ausführungsform umfasst der Schritt des Generierens des Konfigurationsdatensatzes ein Bestimmen, Berechnen und/oder Ermitteln, durch die Datenverarbeitungsvorrichtung, einer oder mehrerer geometrischer Parameter des Füllstandanzeigegeräts oder Füllstandmessgeräts zur Spezifikation und/oder Definition einer Geometrie des Füllstandanzeigegeräts oder Füllstandmessgeräts. Alternativ oder zusätzlich umfasst der Schritt des Generierens des Konfigurationsdatensatzes ein Ableiten, von dem Spezifikationsdatensatz durch die Datenverarbeitungsvorrichtung, einer oder mehrerer geometrischer Parameter des Füllstandanzeigegeräts oder Füllstandmessgeräts zur Spezifikation einer Geometrie des Füllstandanzeigegeräts oder Füllstandmessgeräts.

Gemäß einer Ausführungsform umfasst der wenigstens eine geometrische Parameter des Füllstandanzeigegeräts oder Füllstandmessgeräts eine Länge eines Bypassrohrs des Füllstandanzeigegeräts oder Füllstandmessgeräts, einen Durchmesser eines Bypassrohrs des Füllstandanzeigegeräts oder Füllstandmessgeräts, einen Durchmesser eines Prozessanschlusses, eine Position eines Prozessanschlusses des Füllstandanzeigegeräts oder Füllstandmessgeräts, einen Durchmesser einer Querverbindung, eine Wandstärke eines oder mehrere Anschlussbereiche des Füllstandanzeigegeräts oder Füllstandmessgeräts, eine Festigkeit eines oder mehrerer Anschlussbereiche des Füllstandanzeigegeräts oder Füllstandmessgeräts, eine Geometrie eines oder mehrerer Anschlussstutzen des Füllstandanzeigegeräts oder Füllstandmessgeräts, eine Geometrie eines oder mehrerer Anschlussbereiche des Füllstandanzeigegeräts oder Füllstandmessgeräts, eine Festigkeit eines oder mehrerer Anschlussbereiche des Füllstandanzeigegeräts oder Füllstandmessgeräts, eine Geometrie eines oder mehrerer Prozessanschlüsse des Füllstandanzeigegeräts oder Füllstandmessgeräts, eine Anzahl von Prozessanschlüssen des Füllstandanzeigegeräts oder Füllstandmessgeräts, eine Anzahl von Querverbindungen des Füllstandanzeigegeräts oder Füllstandmessgeräts zur Verbindung eines Bypassrohrs des Füllstandanzeigegeräts oder Füllstandmessgeräts mit einer Wand, insbesondere einer Wand eines Behälters und/oder einer Messanlage, einen Abstand zwischen zwei Querverbindungen des Füllstandanzeigegeräts oder Füllstandmessgeräts zur Verbindung eines Bypassrohrs des Füllstandanzeigegeräts oder Füllstandmessgeräts mit einer Wand, eine Position eines oder mehrerer Prozessanschlüsse des Füllstandanzeigegeräts oder Füllstandmessgeräts, und/oder eine Anzahl von Magnetschaltern des Füllstandanzeigegeräts oder Füllstandmessgeräts.

Gemäß einer Ausführungsform wird der Konfigurationsdatensatz basierend auf der wenigstens einen in dem Spezifikationsdatensatz enthaltenen Spezifikation des Füllstandanzeigegeräts oder Füllstandmessgeräts und basierend auf wenigstens einem vorbestimmten Referenzwert, welcher mit der wenigstens einen Spezifikation in Zusammenhang steht, generiert. Mit anderen Worten kann beim Generieren des Konfigurationsdatensatzes ein vorbestimmten Referenzwert berücksichtigt werden. Werden zum Beispiel Daten, wie etwa eine Geometrie, Form, eine Struktur und/oder eine Funktion des Füllstandanzeigegeräts oder Füllstandmessgeräts beim Generieren des Konfigurationsdatensatzes ermittelt und/oder berechnet und weichen in ungünstiger Weise von dem Referenzwert ab, so kann eine solche Abweichung zum Beispiel zum Anpassen der ermittelten Daten und/oder zum Absetzen einer Meldung an den Benutzer führen. Über den wenigstens einen Referenzwert können beispielsweise gesetzliche Vorgaben, Regeln, Normen oder Vorschriften berücksichtigt werden. Alternativ oder zusätzlich kann ein empirischer Referenzwert zur Überprüfung einer Spezifikation und zur Ermittlung des Konfigurationsdatensatzes herangezogen werden.

Gemäß einer Ausführungsform umfasst der wenigstens eine Referenzwert einen Grenzdruck für einen oder mehrere Anschlussbereiche des Füllstandanzeigegeräts oder Füllstandmessgeräts, einen Grenzdruck für einen oder mehrere Anschlussstutzen/Befestigungsstutzen des Füllstandanzeigegeräts oder Füllstandmessgeräts, einen Grenzdruck für eine oder mehrere Querverbindungen des Füllstandanzeigegeräts oder Füllstandmessgeräts zur Verbindung eines Bypassrohrs des Füllstandanzeigegeräts oder Füllstandmessgeräts mit einem Behälter Füllstandanzeigegeräts oder Füllstandmessgeräts, einen Mindestabstand zwischen zwei benachbarten Querverbindungen des Füllstandanzeigegeräts oder Füllstandmessgeräts zur Verbindung eines Bypassrohrs des Füllstandanzeigegeräts oder Füllstandmessgeräts mit einem Behälter, eine Mindestwandstärke eines Anschlussbereichs (oder Anschluss-/Befestigungsstutzens) des Füllstandanzeigegeräts oder Füllstandmessgeräts und/oder eine Mindestfestigkeit eines Anschlussbereichs (oder Anschluss-/Befestigungsstutzens) des Füllstandanzeigegeräts oder Füllstandmessgeräts.

Der Begriff "Referenzwert" ist im Kontext der vorliegenden Offenbarung breit zu verstehen. Es kann sich dabei um einen voreingestellten Wert, einen Grenzwert und/oder Vorgabewert handeln.

Der wenigstens Referenzwert kann beispielsweise in der Datenverarbeitungsvorrichtung und/oder in einem dafür vorgesehenen Speicher hinterlegt sein. Alternativ oder zusätzlich kann der wenigstens eine Referenzwert durch die Datenverarbeitungsvorrichtung von einem externen Speicher abgerufen werden. Der Referenzwert kann optional Benutzerunabhängig gespeichert sein, sodass ein Benutzer beispielsweise den Referenzwert nicht ändern kann. Es ist jedoch denkbar, dass der Referenzwert ebenso von einem Benutzer, beispielsweise von einem Benutzer mit entsprechender Benutzerfreigabe angepasst, eingetragen und/oder gespeichert werden kann.

Gemäß einer Ausführungsform weist das Füllstandanzeigegerät oder Füllstandmessgerät zwei oder mehr Querverbindungen zur Verbindung eines Bypassrohrs des Füllstandanzeigegeräts oder Füllstandmessgeräts mit einer Wand, insbesondere einer Wand eines Behälters auf. Zusätzlich umfasst der Schritt des Generierens des Konfigurationsdatensatzes ein Berechnen eines Abstands zwischen zwei oder mehr Querverbindungen des Füllstandanzeigegeräts oder Füllstandmessgeräts auf.

Bei der Querverbindung kann es sich um eine Horizontal-Vertikal-Verbindung zur mechanischen und/oder fluidischen Kopplung des Bypassrohrs mit einem Behälter handeln. Beispielsweise kann die Querverbindung senkrecht zur Hauptachse, bzw. Längsachse, des Bypassrohrs des Füllstandanzeigegeräts oder Füllstandmessgeräts angeordnet sein.

Es kann sich zum Beispiel als vorteilhaft erweisen, den Abstand zwischen zwei oder mehr Querverbindungen, insbesondere direkt in Längsrichtung des Bypassrohrs benachbarten Querverbindungen, zu berechnen, etwa um eine verbesserte Kraftverteilung und/oder Druckverteilung entlang des Bypassrohrs und/oder an den Anschlussbereichen zu ermöglichen.

Gemäß einer Ausführungsform umfasst der Schritt des Generierens des Konfigurationsdatensatzes ein Berechnen einer Geometrie wenigstens einer Querverbindung, wenigstens eines Anschlussbereichs und/oder wenigstens eines Prozessanschlusses des Füllstandanzeigegeräts oder Füllstandmessgeräts auf. Dadurch kann eine mechanische Stabilität der Querverbindungen sichergestellt sein.

Das Generieren des Konfigurationsdatensatzes kann beispielsweise ein Berechnen einer Wanddicke oder Wandstärke einer Querverbindung, eines Anschlussbereichs und/oder eines Prozessanschlusses des Füllstandanzeigegeräts oder Füllstandmessgeräts umfassen. Der benannte Schritt kann ebenso das Auswählen eines Materials für einen Teil und/oder ein Element des Füllstandanzeigegeräts oder Füllstandmessgeräts umfassen.

Gemäß einer Ausführungsform weist das Verfahren ferner folgende Schritte auf:
- Ermitteln, basierend auf dem Spezifikationsdatensatz, einer Mehrzahl von Konfigurationsmöglichkeiten für das Füllstandanzeigegerät oder Füllstandmessgerät; und
- Selektieren einer der ermittelten Konfigurationsmöglichkeiten, wobei der Konfigurationsdatensatz basierend auf der selektierten Konfigurationsmöglichkeit für das Füllstandanzeigegerät oder Füllstandmessgerät generiert wird.

Die Datenverarbeitungsvorrichtung kann beispielsweise mehrere Konfigurationsmöglichkeiten basierend auf dem Spezifikationsdatensatz ermitteln, und beispielsweise basierend auf einer Auswahlregel eine der Möglichkeiten selektieren und den Konfigurationsdatensatz erstellen. Alternativ kann eine der Konfigurationsmöglichkeiten über eine Benutzereingabe durch den Benutzer gewählt werden.

Gemäß einer Ausführungsform weist das Verfahren ferner ein Konfigurieren des Füllstandanzeigegeräts oder Füllstandmessgeräts mittels des Konfigurationsdatensatzes auf. Dies kann beispielsweise eine Festlegen und/oder Ermitteln einer Parametrierung des Füllstandanzeigegeräts oder Füllstandmessgeräts umfassen.

Es ist denkbar, dass beispielsweise ein virtueller Zwilling des Füllstandanzeigegeräts oder Füllstandmessgeräts basierend auf dem Konfigurationsdatensatz erstellt und/oder erzeugt wird. Somit kann ein virtueller Zwilling des Füllstandanzeigegeräts oder Füllstandmessgeräts mittels des Konfigurationsdatensatzes konfiguriert werden. Anhand des virtuellen Zwillings des Füllstandanzeigegeräts oder Füllstandmessgeräts kann die Fertigung, Herstellung und/oder Konfiguration des tatsächlichen Füllstandanzeigegeräts oder Füllstandmessgeräts vereinfacht werden.

Gemäß einer Ausführungsform weist das Verfahren ferner ein Überprüfen dahingehend auf, ob die wenigstens eine in dem Spezifikationsdatensatz enthaltene Spezifikation des Füllstandanzeigegeräts oder Füllstandmessgeräts durch die in dem Konfigurationsdatensatz definierte Geometrie, Struktur und/oder Funktion des Füllstandanzeigegeräts oder Füllstandmessgeräts erfüllt ist. Mit anderen Worten kann die Datenverarbeitungsvorrichtung überprüfen, ob das Analysieren des Spezifikationsdatensatzes unter Generieren eines Konfigurationsdatensatz derart erfolgt ist, dass der Konfigurationsdatensatz die wenigstens eine Spezifikation enthält und/oder widerspiegelt.

Gemäß einer Ausführungsform weist das Verfahren ferner ein Absetzen und/oder Bereitstellen einer Fehlermeldung basierend auf dem Analysieren des Spezifikationsdatensatzes auf. Die Fehlermeldung kann beispielsweise an einer Benutzeroberfläche und/oder an einer Benutzerschnittstelle einem Benutzer bereitgestellt und/oder ausgegeben werden. Die Fehlermeldung kann einen Benutzer auf eine fehlende und/oder fehlerhafte Spezifikation des Füllstandanzeigegeräts oder Füllstandmessgeräts in dem Spezifikationsdatensatz und/oder auf eine Fehlkonfiguration in dem Konfigurationsdatensatz hin. Beispielsweise kann die Datenverarbeitungsvorrichtung überprüfen, ob zwei in dem Spezifikationsdatensatz angegebene Spezifikationen und/oder zwei in dem Konfigurationsdatensatz angegebene Konfigurationen zueinander in Widerspruch stehen.

Es kann vorkommen, dass die Datenverarbeitungsvorrichtung über nicht alle Daten verfügt, die nötig sind um eine Geometrie, eine Form, eine Struktur, eine Funktion, ein Merkmal, ein Maß, eine Charakteristik zu berechnen, zu ermitteln und/oder zu bestimmen. Somit kann die Datenverarbeitungsvorrichtung und/oder eine weitere Einheit, wie etwa eine Benutzerschnittstelle oder ein Endgerät, eine Meldung absetzen, die den Benutzer möglicherweise auffordert, eine weitere Spezifikation des Füllstandanzeigegeräts oder Füllstandmessgeräts an der Datenverarbeitungsvorrichtung bereitzustellen und/oder eine bereits bereitgestellte Spezifikation des Füllstandanzeigegeräts oder Füllstandmessgeräts anzupassen. Die Meldung kann eine optische und/oder eine akustische Meldung sein.

Alternativ oder zusätzlich kann eine Meldung abgesetzt werden, welche darauf hinweist, dass basierend auf dem vorhandenen Spezifikationsdatensatz mehrere Konfigurationsdatensätze generiert worden sind, wobei jeder Konfigurationsdatensatz eine unterschiedliche Konfigurationsmöglichkeit des Füllstandanzeigegeräts oder Füllstandmessgeräts ermöglichen kann. Der Benutzer kann somit beispielsweise aufgefordert werden, eine Konfiguration und/oder einen Konfigurationsdatensatz auszuwählen.

Gemäß einer Ausführungsform weist das Verfahren ferner ein Erstellen, basierend auf dem Konfigurationsdatensatz, einer CAD-Spezifikation des Füllstandanzeigegeräts oder Füllstandmessgeräts zur Fertigung des Füllstandanzeigegeräts oder Füllstandmessgeräts auf. Beispielsweise kann eine CAD-Datei (Computer Aided Design) durch die Datenverarbeitungsvorrichtung erstellt und/oder ausgegeben werden. Basierend auf der CAD-Spezifikation kann das Füllstandanzeigegerät oder Füllstandmessgerät hergestellt und/oder gefertigt werden. Eine durch den Benutzer vorgenommene Konfiguration eines Füllstandanzeigegeräts oder Füllstandmessgeräts kann somit unmittelbar zur Fertigung des Füllstandanzeigegeräts oder Füllstandmessgeräts verwendet werden, insbesondere ohne, dass fachmännische Ressourcen zur Erstellung der CAD-Spezifikation nötig sind. Dies kann signifikante Personal- und Kostenersparnisse im Rahmen der Fertigung mit sich bringen.

Die CAD-Spezifikation kann alle nötigen Eckdaten, Maße und/oder Charakteristik des Füllstandanzeigegeräts oder Füllstandmessgeräts aufweisen, welche zur Fertigung des Füllstandanzeigegeräts oder Füllstandmessgeräts und/oder zur Planung des Einsetzens des Füllstandanzeigegeräts oder Füllstandmessgeräts erforderlich sein können.

Ein weiterer Aspekt der vorliegenden Offenbarung betrifft ein Füllstandanzeigegerät oder Füllstandmessgerät, welches mittels einer Datenverarbeitungsvorrichtung gemäß dem Verfahren, so wie voranstehend und nachfolgend beschrieben, konfiguriert, parametriert gefertigt und/ hergestellt ist. Es sei bemerkt, dass das Füllstandanzeigegerät oder Füllstandmessgerät mittels der Datenverarbeitungsvorrichtung vor und/oder nach seinem ersten Einsatz gemäß dem Verfahren, so wie voranstehend und nachfolgend beschrieben, konfiguriert werden kann.

Ein weiterer Aspekt der vorliegenden Offenbarung betrifft eine Datenverarbeitungsvorrichtung zum Konfigurieren eines Füllstandanzeigegeräts oder Füllstandmessgeräts, wobei die Datenverarbeitungsvorrichtung dazu eingerichtet ist, Schritte des Verfahrens, so wie voranstehend und nachfolgend beschrieben, durchzuführen. Die Datenverarbeitungsvorrichtung kann ebenso als Server, Recheneinheit, Analysenvorrichtung und/oder Applikation angesehen werden. Insbesondere kann die Datenverarbeitungsvorrichtung zum Konfigurieren und/oder zum Herstellen eines Füllstandanzeigegeräts oder Füllstandmessgeräts dienen.

Ein weiterer Aspekt der vorliegenden Offenbarung betrifft ein Programmelement, welches, wenn es auf einer Datenverarbeitungsvorrichtung ausgeführt wird, die Datenverarbeitungsvorrichtung anleitet, Schritte des Verfahrens, so wie voranstehend und nachfolgend beschrieben, durchzuführen.

Ein weiterer Aspekt der vorliegenden Offenbarung betrifft ein computerlesbares Medium, auf dem ein Programmelement, welches, wenn es auf einer Datenverarbeitungsvorrichtung ausgeführt wird, die Datenverarbeitungsvorrichtung anleitet, Schritte des Verfahrens, so wie voranstehend und nachfolgend beschrieben, durchzuführen .

Ein weiterer Aspekt der vorliegenden Offenbarung betrifft die Verwendung einer Datenverarbeitungsvorrichtung, so wie voranstehend beschrieben, zum Konfigurieren eines Füllstandanzeigegeräts oder Füllstandmessgeräts.

Im Folgenden werden mit Verweis auf die Figuren Ausführungsformen der vorliegenden Offenbarung beschrieben. Werden in der folgenden Figurenbeschreibung die gleichen Bezugszeichen verwendet, so bezeichnen diese gleiche oder ähnliche Elemente. Die Darstellungen in den Figuren sind schematisch und nicht maßstäblich.

### Kurze Beschreibung der Figuren

Figur 1 zeigt eine Datenverarbeitungsvorrichtung gemäß einer Ausführungsform.
Figur 2 zeigt ein Flussdiagram eines Verfahrens gemäß einer Ausführungsform.
Figur 3 zeigt eine durch eine Datenverarbeitungsvorrichtung bereitgestellte Benutzeroberfläche.
Figur 4 zeigt ein Füllstandanzeigegerät oder Füllstandmessgerät gemäß einer Ausführungsform.
Figur 5 zeigt ein Füllstandanzeigegerät oder Füllstandmessgerät gemäß einer weiteren Ausführungsform.

### Detaillierte Beschreibung von Ausführungsformen

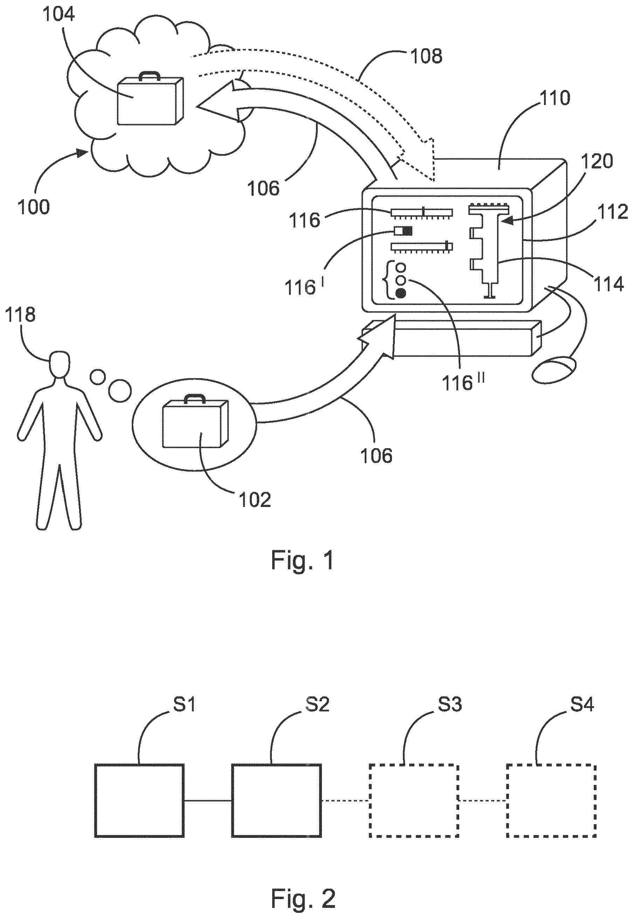

Figur 1 zeigt eine Datenverarbeitungsvorrichtung 100 gemäß einer Ausführungsform. Die Datenverarbeitungsvorrichtung 100 der Figur 1 ist als Server dargestellt kann aber genauso als Recheneinheit in einem Computer implementiert oder gespeichert sein. Die Datenverarbeitungsvorrichtung 100 kann einen Spezifikationsdatensatzes 102 empfangen, insbesondere direkt empfangen ober basierend auf einer Eingabe eines Benutzers 118 mittels einer Benutzerschnittstelle 110 erstellen.

Der Spezifikationsdatensatz 102 weist wenigstens eine Spezifikation eines Füllstandanzeigegeräts oder Füllstandmessgeräts 114 auf, welches der Benutzer 118 konfigurieren möchte. Mit anderen Worten kann ein Benutzer 118 einen Spezifikationsdatensatz 102 der Datenverarbeitungsvorrichtung direkt oder über eine Benutzerschnittstelle 110 bereitstellen. Denkbar ist ebenso, dass die Datenverarbeitungsvorrichtung selbst einen Spezifikationsdatensatz 102 erstellt.

Die Datenverarbeitungsvorrichtung 100 kann den Spezifikationsdatensatz 102 analysieren. Das Analysieren des Spezifikationsdatensatzes 102 umfasst das Generieren 108 eines Konfigurationsdatensatzes 104. Der Konfigurationsdatensatz 104 kann ferner dazu dienen, eine graphische Darstellung 120 des Füllstandanzeigegeräts oder Füllstandmessgeräts **114** bereitzustellen, sodass diese an einer Benutzerschnittstelle 110 ausgegeben werden kann.

Es sei bemerkt, dass sowohl der Spezifikationsdatensatz 102 als auch der Konfigurationsdatensatz 104 lediglich schematisch anhand in Figur 1 dargestellt sind. Der Spezifikationsdatensatz 102 kann Spezifikationen des Füllstandanzeigegeräts oder Füllstandmessgeräts 114 beispielsweise bezüglich einer benutzerdefinierten Anforderung an das Füllstandanzeigegerät oder Füllstandmessgerät 114, eines Attributs des Füllstandanzeigegeräts oder Füllstandmessgeräts 114 und/oder eines für das Füllstandanzeigegerät oder Füllstandmessgerät 114 vorgesehenen Einsatzbereiches aufweisen. Der Benutzer 118 kann zum Beispiel über eine oder mehrere Benutzereingaben definieren oder spezifizieren, wofür und wie das Füllstandanzeigegerät oder Füllstandmessgerät eingesetzt werden soll und/oder welche Anforderungen es erfüllen soll. Eine Spezifikation des Füllstandanzeigegeräts oder Füllstandmessgeräts 114 kann dabei ein Merkmal und/oder technisches Charakteristikum des Füllstandanzeigegeräts oder Füllstandmessgeräts sein. Die Spezifikationen können einem Wunsch oder eine Vorstellung des Benutzers für das Füllstandanzeigegerät oder Füllstandmessgerät entsprechen und somit eine individuelle Konfiguration des Füllstandanzeigegeräts oder Füllstandmessgeräts nach Benutzervorgaben ermöglichen.

Der Konfigurationsdatensatz 104, welcher von der Datenverarbeitungsvorrichtung basierend auf dem empfangenen Spezifikationsdatensatz generiert werden kann, umfasst in der Regel eine Geometrie, Struktur und/oder Funktion des Füllstandanzeigegeräts oder Füllstandmessgeräts 114. Der Konfigurationsdatensatz 104 kann im Allgemeinen die für die Konfiguration des Füllstandanzeigegeräts oder Füllstandmessgeräts 114 nötigen Daten und/oder Merkmale umfassen. Das Füllstandanzeigegerät oder Füllstandmessgerät 114 kann somit basierend auf dem Konfigurationsdatensatz 104 graphisch darstellbar, konfigurierbar und/oder fertigbar sein.

Ein Benutzer 118 kann beispielsweise durch ein anpassbares Bedienelement 116 an einer Benutzeroberfläche, 112 welche an der Benutzerschnittstelle bereitgestellt sein kann, eine oder mehrere Spezifikationen für das Füllstandanzeigegerät oder Füllstandmessgerät festlegen. Die Datenverarbeitungsvorrichtung 100 kann entsprechende Benutzereingaben verarbeiten und den Spezifikationsdatensatz und/oder den Konfigurationsdatensatz ermitteln. Mit anderen Worten kann der Benutzer den Spezifikationsdatensatz 102 und/oder eine Spezifikation des Spezifikationsdatensatzes 102 eingeben oder anpassen, in dem er eines oder mehrere Bedienelemente 116 anpasst. Der Benutzer 118 kann somit eine Benutzereingabe über eines oder mehrere Bedienelemente 116 abgeben, sodass der Spezifikationsdatensatz 102 zum Teil basierend auf einer solchen Benutzereingabe erstellbar ist. Es können mehrere Bedienelemente 116 in unterschiedlicher Form an der Benutzeroberfläche vorhanden sein. Beispielsweise kann als Bedienelement 116 ein Schiebregler 116, ein graphisch bedienbares Regelelement 116', ein Dropdownmenü, ein Auswahlregler und/oder ein Drehregler vorgesehen sein.

Mittels einer Benutzerschnittstelle 110 und dessen Benutzeroberfläche 112 kann einem Benutzer 118 eine graphische Darstellung des zu konfigurierenden Füllstandanzeigegeräts oder Füllstandmessgeräts 114 bereitgestellt werden. Die graphische Darstellung 120 des Füllstandanzeigegeräts oder Füllstandmessgeräts basiert auf dem Konfigurationsdatensatz 104 und wird von der Datenverarbeitungsvorrichtung 100 erzeugt oder generiert. Eine solche graphische Darstellung 120 kann beispielsweise eine CAD-Zeichnung sein und/oder eine 3D-Darstelleung des Füllstandanzeigegeräts oder Füllstandmessgeräts 114 sein. Es ist denkbar, dass der Benutzer den generierten Konfigurationsdatensatz, welcher zum Beispiel aus einer Analyse von dem vom Benutzer eingegebenen Spezifikationsdatensatz abgeleitet worden ist, an einer Benutzeroberfläche 112 ablesen kann. Zudem ist es denkbar, dass der Benutzer 118 den Konfigurationsdatensatz 104 anpassen oder ändern möchte, da beispielsweise die graphische Darstellung 120 des Füllstandanzeigegeräts oder Füllstandmessgeräts 114 noch nicht zutreffend der Vorstellung des gewünschten Füllstandanzeigegeräts oder Füllstandmessgeräts 114 entspricht.

Der Konfigurationsdatensatz 104 kann ebenso vorerst als Vorschlag für den Benutzer 118 verstanden werden. Der Konfigurationsdatensatz 104 kann mehrere Konfigurationsmöglichkeiten zum Konfigurieren des Füllstandanzeigegeräts oder Füllstandmessgeräts 114 umfassen, zwischen welchen der Benutzer 118 beispielsweise über die Benutzeroberfläche 112 auswählen kann. Nach einem solchen Auswählen einer Konfigurationsmöglichkeit kann beispielsweise der Konfigurationsdatensatz 104 lediglich den Datensatz umfassen, welcher den Anforderungen an das Füllstandanzeigegerät oder Füllstandmessgerät 114 entspricht und/oder die Voraussetzungen für das Füllstandanzeigegerät oder Füllstandmessgerät 114 erfüllt.

Figur 2 zeigt ein Flussdiagram eines Verfahrens gemäß einer Ausführungsform. In einem ersten Schritt S1 wird, an einer Datenverarbeitungsvorrichtung 100, ein Spezifikationsdatensatz 102 bereitgestellt 106, welcher wenigstens eine Spezifikation des Füllstandanzeigegeräts oder Füllstandmessgeräts 114 bezüglich wenigstens einer benutzerdefinierten Anforderung an das Füllstandanzeigegerät oder Füllstandmessgerät 114, wenigstens eines Attributs des Füllstandanzeigegeräts oder Füllstandmessgeräts 114 und/oder wenigstens eines für das Füllstandanzeigegerät oder Füllstandmessgerät 114 vorgesehenen Einsatzbereiches aufweist.

In einem weiteren Schritt S2 wird mit der Datenverarbeitungsvorrichtung 100 die wenigstens eine in dem Spezifikationsdatensatz 102 enthaltene Spezifikation des Füllstandanzeigegeräts oder Füllstandmessgeräts 114 unter Generieren 108 eines Konfigurationsdatensatzes 104 zur Konfiguration des Füllstandanzeigegeräts oder Füllstandmessgeräts 114 analysiert, wobei der Konfigurationsdatensatz 104 eine Geometrie, Struktur und/oder Funktion des Füllstandanzeigegeräts oder Füllstandmessgeräts 114 derart definiert, dass das Füllstandanzeigegerät oder Füllstandmessgerät 114 basierend auf dem Konfigurationsdatensatz 104 graphisch darstellbar und/oder fertigbar ist.

In einem weiteren Schritt S3 wird, mit der Datenverarbeitungsvorrichtung 100 basierend auf dem Konfigurationsdatensatz 104, eine graphischen Darstellung 120, insbesondere eine 3D-Darstellung, des Füllstandanzeigegeräts oder Füllstandmessgeräts 114 zur Ausgabe an einer Benutzerschnittstelle 110, wie etwa an einem Monitor, einem Handy und/oder einem Display, erzeugt.

In einem weiteren optionalen Schritt S4 wird eine Benutzerschnittstelle 110 zur Ausgabe einer Benutzeroberfläche 112 mit wenigstens einem durch einen Benutzer 118 anpassbaren Bedienelement 116 durch die Datenverarbeitungsvorrichtung 100 bereitgestellt. Über das Bedienelement kann der Benutzer Anpassungen vornehmen, welche die Datenverarbeitungsvorrichtung durch Aktualisieren und/oder entsprechendes Anpassen des Konfigurationsdatensatzes, sowie optional Anpassen der graphischen Darstellung, berücksichtigen kann.

Die Spezifikation des Füllstandanzeigegeräts oder Füllstandmessgeräts 114 und/oder der Konfigurationsdatensatz kann somit basierend auf einer Anpassung eines oder mehreren Bedienelemente 116 durch den Benutzer 118 festgelegt werden. Der Spezifikationsdatensatz 102 kann ferner zum Teil basierend auf einer Benutzereingabe über ein Bedienelement 116 erstellt werden. Mit anderen Worten kann der Benutzer 118 den Spezifikationsdatensatz 102 in unterschiedlicher Weise der Datenverarbeitungsvorrichtung 100 bereitstellen.

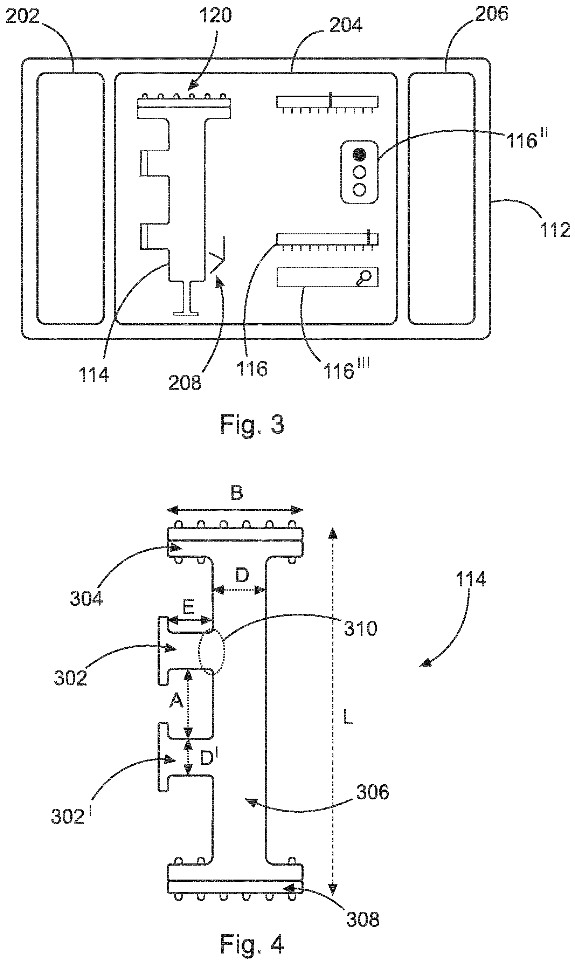

Figur 3 zeigt eine Benutzeroberfläche 112, beispielsweise eine Benutzeroberfläche 112 einer Benutzerschnittstelle 110, wie sie von einer Datenverarbeitungsvorrichtung 100 bereitgestellt werden kann.

Die Benutzeroberfläche 112 kann zum Beispiel in mehrere Bereiche, etwa interaktive und nicht-interaktive Bereiche, unterteilt sein. Solche Bereiche können auch als Maske bezeichnet werden. Es sei bemerkt, dass die Benutzeroberfläche 112 der Figur 3 eine Benutzeroberfläche, wie in Figur 1 gezeigt, sein kann.

In einem ersten Bereich, wie etwa einer Eingabemaske 202, kann der Spezifikationsdatensatz 102 gezeigt und/oder vom Benutzer eingegeben werden, sodass der Spezifikationsdatensatz 102 der Datenverarbeitungsvorrichtung 100 bereitgestellt werden kann. In einem weiteren möglichen zweiten Bereich 204 der Benutzeroberfläche 112, wie etwa einem Produktnavigator-Bereich, kann eine graphische Darstellung 120 des Füllstandanzeigegeräts oder Füllstandmessgeräts 114 eingeblendet werden. Die graphische Darstellung 120 kann, wie die 3D-Achsen 208 anzeigen, eine 3D-Darstellung 120 sein. Der Produktnavigator-Bereich 204 kann beispielsweise zumindest einen Teil des Konfigurationsdatensatzes 104, welcher aus einer Analyse mit der Datenverarbeitungsvorrichtung 100 (siehe Figur 1) entstanden sein kann, anzeigen oder einblenden.

Der Produktnavigator-Bereich 204 oder ein anderer Bereich kann anpassbare Bedienelemente 116, 116', 116", 116" aufweisen, wodurch ein Benutzer 118 teilweise den Spezifikationsdatensatz 102 eingeben oder anpassen kann. Ein Anpassen des Spezifikationsdatensatzes 102 kann sowohl vor und nach dem Analysieren mit der Datenverarbeitungsvorrichtung 100 und dem Generieren eines Konfigurationsdatensatzes 104 erfolgen. Es ist zum Beispiel denkbar, dass ein Konfigurationsdatensatz 104 bereits basierend auf dem analysierten Spezifikationsdatensatz generiert worden ist, und basierend auf einer oder mehreren Benutzereingaben mittels einem Bedienelement 116 angepasst oder geändert werden kann.

Es ist zum Beispiel denkbar, dass die Anzahl und/oder die Art von Bedienelementen 116 basierend auf dem generierten Konfigurationsdatensatz 104 angepasst oder angezeigt wird. Beispielsweise kann es vorkommen, dass der Konfigurationsdatensatz 104 nach dem Analysieren des Spezifikationsdatensatzes 102 nicht alle Information, Daten, Merkmale und/oder Einstellung umfasst, welche für die Konfiguration des Füllstandanzeigegeräts oder Füllstandmessgeräts nötig 114 sind. Möglicherweise kann es daran liegen, dass der Spezifikationsdatensatz 102 nicht alle hierfür nötigen Spezifikation des Füllstandanzeigegeräts oder Füllstandmessgeräts 114 umfasst. Dies kann sozusagen nachgeholt werden, in dem die fehlende Spezifikation des Füllstandanzeigegeräts oder Füllstandmessgeräts 114 über das entsprechende hierfür eingeblendete Bedienelement 116 von einem Benutzer 118 eingegeben werden kann.

Die Benutzeroberfläche 112 kann ferner einen dritten Bereich 206 aufweisen. Der dritte Bereich kann beispielsweise auch als Ausgabemaske 206 bezeichnet werden. Der Konfigurationsdatensatz 104 kann zum Beispiel im dritten Bereich 206 eingeblendet und/oder angezeigt werden. Denkbar ist zudem auch, dass der dritte Bereich 206 dazu dienen kann, eine Meldung, wie etwa eine visuelle Meldung, abzusetzen. Eine solche Meldung kann beispielsweise einen Benutzer darauf hinweisen, dass weitere Spezifikation des Füllstandanzeigegeräts oder Füllstandmessgeräts 114 erforderlich sein können um eine umfangreiche und/oder individuelle Konfiguration des Füllstandanzeigegeräts oder Füllstandmessgeräts 114 zu erreichen.

Figur 4 zeigt ein Füllstandanzeigegerät oder Füllstandmessgerät 114 gemäß einer Ausführungsform. Das Füllstandanzeigegerät oder Füllstandmessgerät 114 der Figur 4 kann mittels einer Datenverarbeitungsvorrichtung 100 (siehe Figur 1) beim Durchführen eines Verfahrens, wie etwa dem Verfahren des Flussdiagrams der Figur 2, konfiguriert werden.

Das Füllstandanzeigegerät oder Füllstandmessgerät 114 der Figur 4 weist ein Bypassrohr 306 mit einem Durchmesser D, zwei Querverbindungen 302, 302' mit jeweils einem Durchmesser D', zwei Prozessanschlüssen 304, 308 mit einem Durchmesser B auf. Zwischen den zwei Querverbindungen 302, 302' kann ein Abstand A sein. Die Querverbindungen 302, 302' können dazu dienen, das Bypassrohr 306 mit einer Wand, etwa einer Wand eines Behälters, mechanisch und/oder fluidisch zu verbinden.

Zudem weist das Füllstandanzeigegerät oder Füllstandmessgerät 114 einen Anschlussbereich 310 auf, welcher eine gewisse Festigkeit aufweisen kann. Beispielsweise kann eine gewisse Wandstärke des Anschlussbereiches 310 erforderlich sein, um einen sicheren Einsatz des Füllstandanzeigegeräts oder Füllstandmessgeräts 114 zu garantieren. Die Wandstärke und/oder die Festigkeit des Anschlussbereiches 310 kann entsprechend von der Datenverarbeitungsvorrichtung 100 (siehe Figur 1) anhand des Spezifikationsdatensatzes 102, aufweisend beispielsweise einen Einsatzdruck, berechnet werden.

Der Konfigurationssatz 104 kann zum Beispiel die Länge L des Bypassrohr 306, den Durchmesser der Prozessanschlüsse 304, 308, den Abstand E zwischen dem Bypassrohr 306 und einer Wand, den Durchmesser D' der Querverbindungen 302, 302', die Anzahl der Querverbindungen 302, 302' und/oder den Abstand A zwischen zwei benachbarten Querverbindungen 302, 302' aufweisen. Diese Maße und/oder Merkmale des Füllstandanzeigegeräts oder Füllstandmessgeräts 114 können von der Datenverarbeitungsvorrichtung 100 (siehe Figur 1) basierend auf dem Spezifikationsdatensatz berechnet, analysiert und/oder abgeleitet worden sein. Es ist zudem denkbar, dass die Datenverarbeitungsvorrichtung 100 beim Generieren des Konfigurationsdatensatzes 104 ferner einen vorbestimmten Referenzwert mitberücksichtig. Der Referenzwert kann im Zusammenhang mit einer Spezifikation des Füllstandanzeigegeräts oder Füllstandmessgeräts 114 stehen. Beispielsweise kann eine maximale Länge L_max des Füllstandanzeigegeräts oder Füllstandmessgeräts 114 vorbestimmt sein und zum Beispiel in der Datenverarbeitungsvorrichtung 100 oder in einem externen Speicher hinterlegt oder gespeichert sein. Alternativ oder zusätzlich kann ein Mindestabstand zweier Querverbindungen, ein Maximalabstand zweier Querverbindungen, ein Referenzdurchmesser eines Anschlussbereichs, eine Referenzfestigkeit eines Anschlussbereichs, ein Referenzdurchmesser eines Flanschs oder dergleichen berücksichtigt werden.

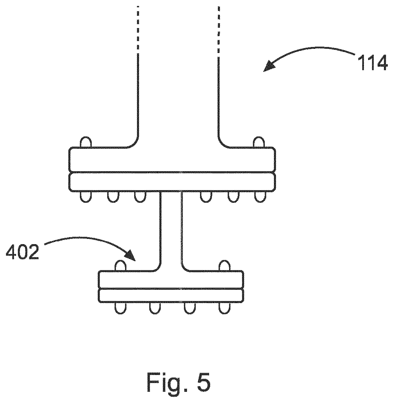

Figur 5 zeigt ein Füllstandanzeigegerät oder Füllstandmessgerät 114 gemäß einer Ausführungsform. Sofern nicht anders beschrieben, weist das Füllstandanzeigegerät oder Füllstandmessgerät 114 der Figur 5 dieselben Merkmale und Elemente auf wie das Füllstandanzeigegerät oder Füllstandmessgerät 114 der Figur 4.

Figur 5 zeigt insbesondere ein Beispiel eines mittels der Datenverarbeitungsvorrichtung 100 (siehe Figur 1) konfigurierten Füllstandanzeigegeräts oder Füllstandmessgeräts 114. Es ist zum Beispiel vorstellbar, dass aus dem Analysieren des Spezifikationsdatensatzes 102 mittels der Datenverarbeitungsvorrichtung 100 errechnet worden ist, dass das Füllstandanzeigegerät oder Füllstandmessgerät 114 für den erwünschten Einsatz, etwa vom Benutzer 118 erwünschten Einsatz, des Füllstandanzeigegeräts oder Füllstandmessgeräts 114 einen weiteren Anschluss 402, wie etwa einen Prozessanschluss, benötigt. Die Datenverarbeitungsvorrichtung 100 kann dies dem Benutzer durch Ausgabe einer entsprechenden Meldung mitteilen.

Ergänzend sei darauf hingewiesen, dass "umfassend" und "aufweisend" keine anderen Elemente oder Schritte ausschließt und die unbestimmten Artikel "eine" oder "ein" keine Vielzahl ausschließen. Bezugszeichen in den Ansprüchen sind nicht als Einschränkungen anzusehen.

## Patentansprüche

1. Computer-implementiertes Verfahren zum Konfigurieren eines Füllstandanzeigegeräts oder Füllstandmessgeräts (114), aufweisend folgende Schritte:
(S1) Bereitstellen (106), an einer Datenverarbeitungsvorrichtung (100), eines Spezifikationsdatensatzes (102), welcher wenigstens eine Spezifikation des Füllstandanzeigegeräts oder Füllstandmessgeräts (114) bezüglich wenigstens einer benutzerdefinierten Anforderung an das Füllstandanzeigegerät oder Füllstandmessgerät (114), wenigstens eines Attributs des Füllstandanzeigegeräts oder Füllstandmessgeräts (114) und/oder wenigstens eines für das Füllstandanzeigegerät oder Füllstandmessgerät (114) vorgesehenen Einsatzbereiches aufweist;
(S2) Analysieren, mit der Datenverarbeitungsvorrichtung (100), der wenigstens einen in dem Spezifikationsdatensatz (102) enthaltenen Spezifikation des Füllstandanzeigegeräts oder Füllstandmessgeräts (114) unter Generieren (108) eines Konfigurationsdatensatzes (104) zur Konfiguration des Füllstandanzeigegeräts oder Füllstandmessgeräts (114), wobei der Konfigurationsdatensatz (104) eine Geometrie, Form, Struktur und/oder Funktion des Füllstandanzeigegeräts oder Füllstandmessgeräts (114) derart definiert, dass das Füllstandanzeigegerät oder Füllstandmessgerät (114) basierend auf dem Konfigurationsdatensatz (104) graphisch darstellbar und/oder fertigbar ist; **gekennzeichnet durch** den folgenden Schritt :
(S3) Erzeugen, mit der Datenverarbeitungsvorrichtung (100) basierend auf dem Konfigurationsdatensatz (104), einer graphischen Darstellung (120), insbesondere einer 3D-Darstellung, des Füllstandanzeigegeräts oder Füllstandmessgeräts (114) zur Ausgabe an einer Benutzerschnittstelle (110).

2. Verfahren nach Anspruch 1, ferner aufweisend:
(S4) Ansteuern, mit der Datenverarbeitungsvorrichtung (100), einer Benutzerschnittstelle (110) zur Ausgabe einer Benutzeroberfläche (112) mit wenigstens einem durch einen Benutzer (118) anpassbaren Bedienelement (116);
wobei die wenigstens eine Spezifikation des Füllstandanzeigegeräts oder Füllstandmessgeräts (114) basierend auf einer Anpassung des wenigstens einen Bedienelements (116) durch den Benutzer (118) festlegbar ist; und/oder
wobei der Spezifikationsdatensatz (102) mit der wenigstens einen Spezifikation des Füllstandanzeigegeräts oder Füllstandmessgeräts (114) zumindest teilweise basierend auf einer Benutzereingabe über das wenigstens eine Bedienelement (116) erstellt wird.

3. Verfahren nach Anspruch 2,
wobei die Benutzerschnittstelle (110) über ein Webinterface zur Anzeige der Benutzeroberfläche (112) durch die Datenverarbeitungsvorrichtung (100) angesteuert wird; und/oder
wobei die Benutzeroberfläche (112) über ein Webinterface an der Benutzerschnittstelle (110) bereitgestellt wird.

4. Verfahren nach einem der voranstehenden Ansprüche,
wobei das Bereitstellen des Spezifikationsdatensatzes (102) umfasst:
Empfangen und/oder Verarbeiten einer Benutzereingabe über wenigstens ein an einer Benutzeroberfläche (112) durch die Datenverarbeitungsvorrichtung (100) bereitgestelltes Bedienelement (116); und
Generieren (108) des Konfigurationsdatensatzes (104) zumindest teilweise basierend auf der Benutzereingabe.

5. Verfahren nach einem der Ansprüche 2 bis 4,
wobei das wenigstens eine Bedienelement (116) ein graphisches Bedienelement (116, 116', 116") ist.

6. Verfahren nach einem der Ansprüche 2 bis 5,
wobei das wenigstens eine Bedienelement (116) einen Schiebregler (116), ein graphisch bedienbares Regelelement (116'), ein Dropdownmenü, einen Auswahlregler und/oder einen Drehregler umfasst.

7. Verfahren nach einem der voranstehenden Ansprüche,
wobei der Spezifikationsdatensatz (102) wenigstens ein Element ausgewählt aus der folgenden Gruppe umfasst:
einer Prozesstemperatur, einem Prozesstemperaturbereich, einem Durchmesser (D') eines Prozessanschlusses des Füllstandanzeigegeräts oder Füllstandmessgeräts (114), einem Prozessdruck, einem Prozessdruckbereich, einer Festigkeit eines oder mehrerer Anschlussbereiche des Füllstandanzeigegeräts oder Füllstandmessgeräts (114), einem Durchmesser (D') eines oder mehrerer Anschlussrohre des Füllstandanzeigegeräts oder Füllstandmessgeräts (114), einem Durchmesser eines Bypassrohrs (D) des Füllstandanzeigegeräts oder Füllstandmessgeräts, einer Wandstärke eines oder mehrerer Anschlussbereiche des Füllstandanzeigegeräts oder Füllstandmessgeräts (114), einer Anzahl von Prozessanschlüsse (304) des Füllstandanzeigegeräts oder Füllstandmessgeräts (114), einer Anzahl von Querverbindungen (302, 302') des Füllstandanzeigegeräts oder Füllstandmessgeräts zur Verbindung eines Bypassrohrs (306) des Füllstandanzeigegeräts oder Füllstandmessgeräts (114) mit einer Wand, einem Abstand (A) zwischen zwei Querverbindungen (302, 302') des Füllstandanzeigegeräts oder Füllstandmessgeräts (114) zur Verbindung eines Bypassrohrs (306) des Füllstandanzeigegeräts oder Füllstandmessgeräts (114) mit einer Wand; und/oder einer Anzahl von Magnetschaltern des Füllstandanzeigegeräts oder Füllstandmessgeräts (114).

8. Verfahren nach einem der voranstehenden Ansprüche,
wobei der Schritt des Generierens des Konfigurationsdatensatzes (104) ein Bestimmen, Berechnen und/oder Ermitteln, durch die Datenverarbeitungsvorrichtung (100), einer oder mehrerer geometrischer Parameter des Füllstandanzeigegeräts oder Füllstandmessgeräts (114) zur Spezifikation einer Geometrie des Füllstandanzeigegeräts oder Füllstandmessgeräts (114) umfasst; und/oder
wobei der Schritt des Generierens des Konfigurationsdatensatzes (104) ein Ableiten, von dem Spezifikationsdatensatz (102) durch die Datenverarbeitungsvorrichtung (100), einer oder mehrerer geometrischer Parameter des Füllstandanzeigegeräts oder Füllstandmessgeräts (114) zur Spezifikation einer Geometrie des Füllstandanzeigegeräts oder Füllstandmessgeräts (114) umfasst.

9. Verfahren nach Anspruch 8,
wobei der wenigstens eine geometrische Parameter des Füllstandanzeigegeräts oder Füllstandmessgeräts (114) eine Länge eines Bypassrohrs (L) des Füllstandanzeigegeräts oder Füllstandmessgeräts, einen Durchmesser (D) eines Bypassrohrs (306) des Füllstandanzeigegeräts oder Füllstandmessgeräts, einen Durchmesser (B) eines Prozessanschlusses (304), eine Position eines Prozessanschlusses (304) des Füllstandanzeigegeräts oder Füllstandmessgeräts, einen Durchmesser (D') einer Querverbindung (302, 302'), eine Wandstärke eines oder mehrere Anschlussbereiche (310) des Füllstandanzeigegeräts oder Füllstandmessgeräts, eine Festigkeit eines oder mehrerer Anschlussbereiche (310) des Füllstandanzeigegeräts oder Füllstandmessgeräts, eine Geometrie eines oder mehrerer Anschlussstutzen (302, 302') des Füllstandanzeigegeräts oder Füllstandmessgeräts, eine Geometrie eines oder mehrerer Anschlussbereiche (310) des Füllstandanzeigegeräts oder Füllstandmessgeräts, eine Festigkeit eines oder mehrerer Anschlussbereiche (310) des Füllstandanzeigegeräts oder Füllstandmessgeräts, eine Geometrie eines oder mehrerer Prozessanschlüsse des Füllstandanzeigegeräts oder Füllstandmessgeräts, eine Anzahl von Prozessanschlüsse (304) des Füllstandanzeigegeräts oder Füllstandmessgeräts, eine Anzahl von Querverbindungen (302, 302') des Füllstandanzeigegeräts oder Füllstandmessgeräts zur Verbindung eines Bypassrohrs (306) des Füllstandanzeigegeräts oder Füllstandmessgeräts mit einer Wand, einen Abstand (A) zwischen zwei Querverbindungen (302, 302') des Füllstandanzeigegeräts oder Füllstandmessgeräts zur Verbindung eines Bypassrohrs (306) des Füllstandanzeigegeräts oder Füllstandmessgeräts mit einer Wand, eine Position eines oder mehrerer Prozessanschlüsse (304) des Füllstandanzeigegeräts oder Füllstandmessgeräts, und/oder eine Anzahl von Magnetschaltern des Füllstandanzeigegeräts oder Füllstandmessgeräts umfasst.

10. Verfahren nach einem der voranstehenden Ansprüche:
wobei der Konfigurationsdatensatz (104) basierend auf der wenigstens einen in dem Spezifikationsdatensatz (102) enthaltenen Spezifikation des Füllstandanzeigegeräts oder Füllstandmessgeräts (114) und basierend auf wenigstens einem vorbestimmten Referenzwert, welcher mit der wenigstens einen Spezifikation in Zusammenhang steht, generiert wird.

11. Verfahren nach Anspruch 10,
wobei der wenigstens eine Referenzwert einen Grenzdruck für einen oder mehrere Anschlussbereiche (310) des Füllstandanzeigegeräts oder Füllstandmessgeräts, einen Grenzdruck für einen oder mehrere Prozessanschlüsse (304) des Füllstandanzeigegeräts oder Füllstandmessgeräts, einen Grenzdruck für eine oder mehrere Querverbindungen (302, 302') des Füllstandanzeigegeräts oder Füllstandmessgeräts zur Verbindung eines Bypassrohrs (306) des Füllstandanzeigegeräts oder Füllstandmessgeräts mit einer Wand, einen Mindestabstand zwischen zwei benachbarten Querverbindungen des Füllstandanzeigegeräts oder Füllstandmessgeräts (114) zur Verbindung eines Bypassrohrs (306) des Füllstandanzeigegeräts oder Füllstandmessgeräts mit einer Wand, eine Mindestwandstärke eines Anschlussbereichs (310) des Füllstandanzeigegeräts oder Füllstandmessgeräts und/oder eine Mindestfestigkeit eines Anschlussbereichs (310) des Füllstandanzeigegeräts oder Füllstandmessgeräts (114) umfasst.

12. Verfahren nach einem der voranstehenden Ansprüche,
wobei das Füllstandanzeigegerät oder Füllstandmessgerät (114) zwei oder mehr Querverbindungen (302, 302') zur Verbindung eines Bypassrohrs (306) des Füllstandanzeigegeräts oder Füllstandmessgeräts mit einer Wand aufweist; und
wobei der Schritt des Generierens des Konfigurationsdatensatzes (104) ein Berechnen eines Abstands (A) zwischen zwei oder mehr Querverbindungen (302, 302') des Füllstandanzeigegeräts oder Füllstandmessgeräts umfasst.

13. Verfahren nach einem der Ansprüche 11 und 12,
wobei der Schritt des Generierens des Konfigurationsdatensatzes (104) ein Berechnen einer Geometrie wenigstens einer Querverbindung (302, 302'), wenigstens eines Anschlussbereichs (310) und/oder wenigstens eines Prozessanschlusses (304) des Füllstandanzeigegeräts oder Füllstandmessgeräts (114) umfasst.

14. Verfahren nach einem der voranstehenden Ansprüche, ferner aufweisend:
Ermitteln, basierend auf dem Spezifikationsdatensatz (102), einer Mehrzahl von Konfigurationsmöglichkeiten für das Füllstandanzeigegerät oder Füllstandmessgerät (114); und
Selektieren einer der ermittelten Konfigurationsmöglichkeiten, wobei der Konfigurationsdatensatz (104) basierend auf der selektierten Konfigurationsmöglichkeit für das Füllstandanzeigegerät oder Füllstandmessgerät (114) generiert wird.

15. Verfahren nach einem der voranstehenden Ansprüche, ferner aufweisend folgenden Schritt:
Konfigurieren des Füllstandanzeigegeräts oder Füllstandmessgeräts (114) mittels des Konfigurationsdatensatzes (104).

16. Verfahren nach einem der voranstehenden Ansprüche, ferner aufweisend folgenden Schritt:
Überprüfen ob die wenigstens eine in dem Spezifikationsdatensatz (102) enthaltene Spezifikation des Füllstandanzeigegeräts oder Füllstandmessgeräts durch die in dem Konfigurationsdatensatz (104) definierte Geometrie, Struktur, Form und/oder Funktion des Füllstandanzeigegeräts oder Füllstandmessgeräts (114) erfüllt ist.

17. Verfahren nach einem der voranstehenden Ansprüche, ferner aufweisend folgenden Schritt:
Absetzen und/oder Bereitstellen einer Fehlermeldung basierend auf dem Analysieren des Spezifikationsdatensatzes (102); und
wobei die Fehlermeldung einen Benutzer (118) auf eine fehlende und/oder fehlerhafte Spezifikation des Füllstandanzeigegeräts oder Füllstandmessgeräts (114) in dem Spezifikationsdatensatz (102) hinweist.

18. Verfahren nach einem der voranstehenden Ansprüche, ferner aufweisend:
Erstellen, basierend auf dem Konfigurationsdatensatz (104), einer CAD-Spezifikation des Füllstandanzeigegeräts oder Füllstandmessgeräts zur Fertigung des Füllstandanzeigegeräts oder Füllstandmessgeräts.

19. Datenverarbeitungsvorrichtung (100) zum Konfigurieren eines Füllstandanzeigegeräts oder Füllstandmessgeräts (114), wobei die Datenverarbeitungsvorrichtung (100) dazu eingerichtet ist, Schritte des Verfahrens nach einem der Ansprüche 1 bis 18 durchzuführen.

20. Programmelement, welches, wenn es auf einer Datenverarbeitungsvorrichtung (100) ausgeführt wird, die Datenverarbeitungsvorrichtung (100) anleitet, Schritte des Verfahrens nach einem der Ansprüche 1 bis 18 durchzuführen

21. Computerlesbares Medium, auf dem ein Programmelement nach Anspruch 20 gespeichert ist.

22. Verwendung einer Datenverarbeitungsvorrichtung (100) nach Anspruch 19 zum Konfigurieren eines Füllstandanzeigegeräts oder Füllstandmessgeräts (114).

## Claims

1. A computer-implemented method for configuring a level indicator or level meter (114), the method comprising:
(S1) providing (106), at a data processing device (100), a specification data set (102) comprising at least one specification of the level indicator or level meter (114) with respect to at least one user-defined requirement for the level indicator or level meter (114), at least one attribute of the level indicator or level meter (114), and/or at least one area of use intended for the level indicator or level meter (114);
(S2) analyzing, with the data processing device (100), the at least one specification of the level indicator or level meter (114) contained in the specification data set (102) based on generating (108) a configuration data set (104) for configuring the level indicator or level meter (114), wherein the configuration data set (104) is indicative of a geometry, shape, structure and/or function of the level indicator or level meter (114) such that the level indicator or level meter (114) is graphically representable and/or producable based on the configuration data set (104);
**characterized by** the step:.
(S3) generating, with the data processing device (100) based on the configuration data set (104), a graphical representation (120), in particular a 3D representation, of the level indicator or level meter (114) for output at a user interface (110).

2. The method according to any one of claims 1 or 2, further comprising:
(S4) operating, by the data processing device (100), a user interface (110) for outputting a graphical user interface (112) with at least one control element (116) adjustable by a user (118);
wherein the at least one specification of the level indicator or level meter (114) is determinable based on user (118) adjustment of the at least one control element (116); and/or
wherein the specification data set (102) having the at least one specification of the level indicator or level meter (114) is generated based at least in part on user input via the at least one control element (116).

3. The method according to claim 2,
wherein the user interface (110) is controlled by the data processing device (100) via a web interface for displaying the graphical user interface (112); and/or
wherein the graphical user interface (112) is provided via a web interface at the user interface (110).

4. The method according to any of the preceding claims,
wherein providing the specification data set (102) comprises:
receiving and/or processing user input via at least one control element (116) provided at a graphical user interface (112) by the data processing device (100); and
generating (108) the configuration data set (104) based at least in part on the user input.

5. The method according to any one of claims 2 to 4,
wherein the at least one control element (116) is a graphical control element (116, 116', 116").

6. The method according to any one of claims 2 to 5,
wherein the at least one control element (116) comprises a slide control (116), a graphically operable control element (116'), a drop-down menu, a selection control, and/or a rotary control.

7. The method according to any of the preceding claims,
wherein the specification data set (102) comprises at least one element selected from the group consisting of:
a process temperature, a process temperature range, a diameter (D') of a process connection of the level indicator or level meter (114), a process pressure, a process pressure range, a strength of one or more connection ranges of the level indicator or level meter (114), a diameter (D') of one or more connection tubes of the level indicator or level meter (114), a diameter of a bypass tube (D) of the level indicator or level meter, a wall thickness of one or more connection areas of the level indicator or level meter (114), a number of process connections (304) of the level indicator or level meter (114), a number of cross connections (302, 302') of the level indicator or level meter for connecting a bypass tube (306) of the level indicator or level meter (114) to a r wall, a distance (A) between two transverse connections (302, 302') of the level indicator or level meter (114) for connecting a bypass tube (306) of the level indicator or level meter (114) to a wall; and/or a number of magnetic switches of the level indicator or level meter (114).

8. The method according to any of the preceding claims,
wherein the step of generating the configuration data set (104) comprises determining, calculating and/or determining, by the data processing device (100), one or more geometric parameters of the level indicator or level meter (114) for specifying a geometry of the level indicator or level meter (114) ; and/or
wherein the step of generating the configuration data set (104) comprises deriving, from the specification data set (102) by the data processing device (100), one or more geometric parameters of the level indicator or level meter (114) for specifying a geometry of the level indicator or level meter (114).

9. The method according to claim 8,
wherein the at least one geometric parameter of the level indicator or level meter (114) comprises a length of a bypass tube (L) of the level indicator or level meter, a diameter (D) of a bypass tube (306) of the level indicator or level meter, a diameter (B) of a process connection (304), a position of a process connection (304) of the level indicator or level meter, a diameter (D') of a cross connection (302, 302'), a wall thickness of one or more connection areas (310) of the level indicator or level meter, a strength of one or more connection areas (310) of the level indicator or level meter, a geometry of one or more connection ports (302, 302') of the level indicator or level meter, a geometry of one or more connection areas (310) of the level indicator or level meter, a solidity of one or more connection areas (310) of the level indicator or level meter, a geometry of one or more process connections of the level indicator or level meter, a number of process connections (304) of the level indicator or level meter, a number of cross connections (302, 302') of the level indicator or level meter for connecting a bypass tube (306) of the level indicator or level meter to a wall, a distance (A) between two transverse connections (302, 302') of the level indicator or level meter for connecting a bypass tube (306) of the level indicator or level meter to a wall , a position of one or more process connections (304) of the level indicator or level meter, and/or a number of magnetic switches of the level indicator or level meter.

10. The method according to any of the preceding claims,
wherein the configuration data set (104) is generated based on the at least one specification of the level indicator or level meter (114) included in the specification data set (102) and based on at least one predetermined reference value associated with the at least one specification.

11. The method according to claim 10,
wherein the at least one reference value is a limit pressure for one or more connection areas (310) of the level indicator or level meter, a limit pressure for one or more process connections (304) of the level indicator or level meter, a limit pressure for one or more cross connections (302, 302') of the level indicator or level meter for connecting a bypass tube (306) of the level indicator or level meter to a wall, a minimum distance between two adjacent transverse connections of the level indicator or level meter (114) for connecting a bypass tube (306) of the level indicator or level meter to a wall, a minimum wall thickness of a connection area (310) of the level indicator or level meter and/or a minimum strength of a connection area (310) of the level indicator or level meter (114).

12. The method according to any of the preceding claims,
wherein the level indicator or level meter (114) includes two or more cross-connections (302, 302') for connecting a bypass tube (306) of the level indicator or level meter to a wall; and
wherein the step of generating the configuration data set (104) comprises calculating a distance (A) between two or more cross-connections (302, 302') of the level indicator or level meter.

13. The method according to any one of claims 11 and 12,
wherein the step of generating the configuration data set (104) comprises calculating a geometry of at least one cross-connection (302, 302'), at least one port region (310), and/or at least one process port (304) of the level indicator or level meter (114).

14. The method according to any one of the preceding claims, further comprising:
determining, based on the specification data set (102), a plurality of configuration options for the level indicator or level meter (114); and
selecting one of the determined configuration options, wherein the configuration data set (104) is generated based on the selected configuration option for the level indicator or level meter (114).

15. The method according to any one of the preceding claims, further comprising:
configuring the level indicator or level meter (114) using the configuration data set (104).

16. The method according to any one of the preceding claims, further comprising:
verifying that the at least one specification of the level indicator or level meter contained in the specification data set (102) is satisfied by the geometry, structure, form and/or function of the level indicator or level meter (114) defined in the configuration data set (104).

17. The method according to any one of the preceding claims, further comprising:
submitting and/or providing an error message based on analyzing the specification data set (102); and
wherein the error message alerts a user (118) to a missing and/or incorrect specification of the level indicator or level meter (114) in the specification data set (102).

18. The method of any one of the preceding claims, further comprising:
generating, based on the configuration data set (104), a CAD specification of the level indicator or level meter for manufacturing the level indicator or level meter.

19. A data processing device (100) for configuring a level indicator or level meter (114), the data processing device (100) being configured to perform steps of the method of any one of claims 1 to 18.

20. A program element which, when executed by a data processing device (100), instructs the data processing device (100) to perform steps of the method according to any one of claims 1 to 18.

21. A computer-readable medium on which is stored a program element according to claim 20.

22. Use of a data processing device (100) according to claim 19 for configuring a level indicator or level meter (114).

## Revendications

1. Procédé mis en œuvre par ordinateur pour configurer un appareil d'affichage de niveau de remplissage ou un appareil de mesure de niveau de remplissage (114), comportant les étapes suivantes consistant à :
(S1) fournir (106), sur un dispositif de traitement de données (100), un ensemble de données de spécification (102) qui comprend au moins une spécification de l'appareil d'affichage de niveau de remplissage ou de l'appareil de mesure de niveau de remplissage (114) concernant au moins une exigence définie par un utilisateur pour l'appareil d'affichage de niveau de remplissage ou l'appareil de mesure de niveau de remplissage (114), au moins un attribut de l'appareil d'affichage de niveau de remplissage ou de l'appareil de mesure de niveau de remplissage (114) et/ou au moins un domaine d'utilisation prévu pour l'appareil d'affichage de niveau de remplissage ou l'appareil de mesure de niveau de remplissage (114) ;
(S2) analyser, avec le dispositif de traitement de données (100), ladite au moins une spécification de l'appareil d'affichage de niveau de remplissage ou de l'appareil de mesure de niveau de remplissage (114) contenue dans l'ensemble de données de spécification (102), en générant (108) un ensemble de données de configuration (104) pour configurer l'appareil d'affichage de niveau de remplissage ou l'appareil de mesure de niveau de remplissage (114), dans lequel l'ensemble de données de configuration (104) définit une géométrie, une forme, une structure et/ou une fonction de l'appareil d'affichage de niveau de remplissage ou de l'appareil de mesure de niveau de remplissage (114), de telle sorte que l'appareil d'affichage de niveau de remplissage ou l'appareil de mesure de niveau de remplissage (114) peut être représenté graphiquement et/ou être fabriqué sur la base de l'ensemble de données de configuration (104) ; **caractérisé par** l'étape suivante consistant à :
(S3) générer, avec le dispositif de traitement de données (100) sur la base de l'ensemble de données de configuration (104), une représentation graphique (120), en particulier une représentation 3D, de l'appareil d'affichage de niveau de remplissage ou de l'appareil de mesure de niveau de remplissage (114), en vue d'une sortie sur une interface utilisateur (110).

2. Procédé selon la revendication 1, comportant en outre de :
(S4) commander, avec le dispositif de traitement de données (100), une interface utilisateur (110) pour délivrer une interface utilisateur graphique (112) avec au moins un élément de commande (116) adaptable par un utilisateur (118) ;
dans lequel ladite au moins une spécification de l'appareil d'affichage de niveau de remplissage ou de l'appareil de mesure de niveau de remplissage (114) peut être déterminée par l'utilisateur (118) sur la base d'une adaptation dudit au moins un élément de commande (116) ; et/ou
dans lequel l'ensemble de données de spécification (102) comportant ladite au moins une spécification de l'appareil d'affichage de niveau de remplissage ou de l'appareil de mesure de niveau de remplissage (114) est établi au moins en partie sur la base d'une entrée d'utilisateur via ledit au moins un élément de commande (116).

3. Procédé selon la revendication 2,
dans lequel l'interface utilisateur (110) est commandée par le dispositif de traitement de données (100) via une interface web pour afficher l'interface utilisateur graphique (112) ; et/ou
dans lequel l'interface utilisateur graphique (112) est fournie via une interface web sur l'interface utilisateur (110).

4. Procédé selon l'une des revendications précédentes,
dans lequel la fourniture de l'ensemble de données de spécification (102) comprend de :
recevoir et/ou traiter une entrée d'utilisateur via au moins un élément de commande (116) fourni sur une interface utilisateur graphique (112) par le dispositif de traitement de données (100) ; et
générer (108) l'ensemble de données de configuration (104) au moins en partie sur la base de l'entrée d'utilisateur.

5. Procédé selon l'une des revendications 2 à 4,
dans lequel ledit au moins un élément de commande (116) est un élément de commande graphique (116, 116', 116").

6. Procédé selon l'une des revendications 2 à 5,
dans lequel ledit au moins un élément de commande (116) comprend un curseur (116), un élément de commande actionnable graphiquement (116'), un menu déroulant, un sélecteur et/ou un bouton rotatif.

7. Procédé selon l'une des revendications précédentes,
dans lequel l'ensemble de données de spécification (102) comprend au moins un élément choisi parmi le groupe suivant :
une température de process, une plage de températures de process, un diamètre (D') d'un raccord de process de l'appareil d'affichage de niveau de remplissage ou de l'appareil de mesure de niveau de remplissage (114), une pression de process, une plage de pressions de process, une résistance d'une ou plusieurs zones de raccordement de l'appareil d'affichage de niveau de remplissage ou de l'appareil de mesure de niveau de remplissage (114), un diamètre (D') d'un ou plusieurs tubes de raccordement de l'appareil d'affichage de niveau de remplissage ou de l'appareil de mesure de niveau de remplissage (114), un diamètre d'un tube de dérivation (D) de l'appareil d'affichage de niveau de remplissage ou de l'appareil de mesure de niveau de remplissage, une épaisseur de paroi d'une ou plusieurs zones de raccordement de l'appareil d'affichage de niveau de remplissage ou de l'appareil de mesure de niveau de remplissage (114), un nombre de raccords de process (304) de l'appareil d'affichage de niveau de remplissage ou de l'appareil de mesure de niveau de remplissage (114), un nombre de liaisons transversales (302, 302') de l'appareil d'affichage de niveau de remplissage ou de l'appareil de mesure de niveau de remplissage pour raccorder un tube de dérivation (306) de l'appareil d'affichage de niveau de remplissage ou de l'appareil de mesure de niveau de remplissage (114) à une paroi, une distance (A) entre deux liaisons transversales (302, 302') de l'appareil d'affichage de niveau de remplissage ou de l'appareil de mesure de niveau de remplissage (114) pour raccorder un tube de dérivation (306) de l'appareil d'affichage de niveau de remplissage ou de l'appareil de mesure de niveau de remplissage (114) à une paroi ; et/ou un nombre de commutateurs magnétiques de l'appareil d'affichage de niveau de remplissage ou de l'appareil de mesure de niveau de remplissage (114).

8. Procédé selon l'une des revendications précédentes,
dans lequel l'étape consistant à générer l'ensemble de données de configuration (104) comprend de déterminer, de calculer et/ou d'établir, par le dispositif de traitement de données (100), un ou plusieurs paramètres géométriques de l'appareil d'affichage de niveau de remplissage ou de l'appareil de mesure de niveau de remplissage (114) pour la spécification d'une géométrie de l'appareil d'affichage de niveau de remplissage ou de l'appareil de mesure de niveau de remplissage (114) ; et/ou
dans lequel l'étape consistant à générer l'ensemble de données de configuration (104) comprend de déduire, à partir de l'ensemble de données de spécification (102) par le dispositif de traitement de données (100), un ou plusieurs paramètres géométriques de l'appareil d'affichage de niveau de remplissage ou de l'appareil de mesure de niveau de remplissage (114) pour spécifier une géométrie de l'appareil d'affichage de niveau de remplissage ou de l'appareil de mesure de niveau de remplissage (114).

9. Procédé selon la revendication 8,
dans lequel ledit au moins un paramètre géométrique de l'appareil d'affichage de niveau de remplissage ou de l'appareil de mesure de niveau de remplissage (114) comprend une longueur d'un tube de dérivation (L) de l'appareil d'affichage de niveau de remplissage ou de l'appareil de mesure de niveau de remplissage, un diamètre (D) d'un tube de dérivation (306) de l'appareil d'affichage de niveau de remplissage ou de l'appareil de mesure de niveau de remplissage, un diamètre (B) d'un raccord de process (304), une position d'un raccord de process (304) de l'appareil d'affichage de niveau de remplissage ou de l'appareil de mesure de niveau de remplissage, un diamètre (D') d'une liaison transversale (302, 302'), une épaisseur de paroi d'une ou plusieurs zones de raccordement (310) de l'appareil d'affichage de niveau de remplissage ou de l'appareil de mesure de niveau de remplissage, une résistance d'une ou plusieurs zones de raccordement (310) de l'appareil d'affichage de niveau de remplissage ou de l'appareil de mesure de niveau de remplissage, une géométrie d'un ou plusieurs embouts de raccordement (302, 302') de l'appareil d'affichage de niveau de remplissage ou de l'appareil de mesure de niveau de remplissage, une géométrie d'une ou plusieurs zones de raccordement (310) de l'appareil d'affichage de niveau de remplissage ou de l'appareil de mesure de niveau de remplissage, une résistance d'une ou plusieurs zones de raccordement (310) de l'appareil d'affichage de niveau de remplissage ou de l'appareil de mesure de niveau de remplissage, une géométrie d'un ou plusieurs raccords de process de l'appareil d'affichage de niveau de remplissage ou de l'appareil de mesure de niveau de remplissage, un nombre de raccords de process (304) de l'appareil d'affichage de niveau de remplissage ou de l'appareil de mesure de niveau de remplissage, un nombre de liaisons transversales (302, 302') de l'appareil d'affichage de niveau de remplissage ou de l'appareil de mesure de niveau de remplissage pour raccorder un tube de dérivation (306) de l'appareil d'affichage de niveau de remplissage ou de l'appareil de mesure de niveau de remplissage à une paroi, une distance (A) entre deux liaisons transversales (302, 302') de l'appareil d'affichage de niveau de remplissage ou de l'appareil de mesure de niveau de remplissage pour raccorder un tube de dérivation (306) de l'appareil d'affichage de niveau de remplissage ou de l'appareil de mesure de niveau de remplissage à une paroi, une position d'un ou plusieurs raccords de process (304) de l'appareil d'affichage de niveau de remplissage ou de l'appareil de mesure de niveau de remplissage et/ou un nombre de commutateurs magnétiques de l'appareil d'affichage de niveau de remplissage ou de l'appareil de mesure de niveau de remplissage.

10. Procédé selon l'une des revendications précédentes :
dans lequel l'ensemble de données de configuration (104) est généré sur la base de ladite au moins une spécification de l'appareil d'affichage de niveau de remplissage ou de l'appareil de mesure de niveau de remplissage (114) contenue dans l'ensemble de données de spécification (102), et sur la base d'au moins une valeur de référence prédéterminée qui est liée à ladite au moins une spécification.

11. Procédé selon la revendication 10,
dans lequel ladite au moins une valeur de référence est une pression limite pour une ou plusieurs zones de raccordement (310) de l'appareil d'affichage de niveau de remplissage ou de l'appareil de mesure de niveau de remplissage, une pression limite pour un ou plusieurs raccords de process (304) de l'appareil d'affichage de niveau de remplissage ou de l'appareil de mesure de niveau de remplissage, une pression limite pour une ou plusieurs liaisons transversales (302, 302') de l'appareil d'affichage de niveau de remplissage ou de l'appareil de mesure de niveau de remplissage pour raccorder un tube de dérivation (306) de l'appareil d'affichage de niveau de remplissage ou de l'appareil de mesure de niveau de remplissage à une paroi, une distance minimale entre deux liaisons transversales adjacentes de l'appareil d'affichage de niveau de remplissage ou de l'appareil de mesure de niveau de remplissage (114) pour raccorder un tube de dérivation (306) de l'appareil d'affichage de niveau de remplissage ou de l'appareil de mesure de niveau de remplissage à une paroi, une épaisseur de paroi minimale d'une zone de raccordement (310) de l'appareil d'affichage de niveau de remplissage ou de l'appareil de mesure de niveau de remplissage et/ou une résistance minimale d'une zone de raccordement (310) de l'appareil d'affichage de niveau de remplissage ou de l'appareil de mesure de niveau de remplissage (114).

12. Procédé selon l'une des revendications précédentes,
dans lequel l'appareil d'affichage de niveau de remplissage ou l'appareil de mesure de niveau de remplissage (114) comprend deux liaisons transversales (302, 302') ou plus pour raccorder un tube de dérivation (306) de l'appareil d'affichage de niveau de remplissage ou de l'appareil de mesure de niveau de remplissage à une paroi ; et
dans lequel l'étape consistant à générer l'ensemble de données de configuration (104) comprend de calculer une distance (A) entre deux liaisons transversales (302, 302') ou plus de l'appareil d'affichage de niveau de remplissage ou de l'appareil de mesure de niveau de remplissage.

13. Procédé selon l'une des revendications 11 et 12,
dans lequel l'étape consistant à générer l'ensemble de données de configuration (104) comprend de calculer une géométrie d'au moins une liaison transversale (302, 302'), d'au moins une zone de raccordement (310) et/ou d'au moins un raccord de process (304) de l'appareil d'affichage de niveau de remplissage ou de l'appareil de mesure de niveau de remplissage (114).

14. Procédé selon l'une des revendications précédentes, comprenant en outre de :
établir, sur la base de l'ensemble de données de spécification (102), une pluralité de possibilités de configuration pour l'appareil d'affichage de niveau de remplissage ou l'appareil de mesure de niveau de remplissage (114) ; et
sélectionner l'une des possibilités de configuration établies, dans lequel l'ensemble de données de configuration (104) est généré sur la base de la possibilité de configuration sélectionnée pour l'appareil d'affichage de niveau de remplissage ou l'appareil de mesure de niveau de remplissage (114).

15. Procédé selon l'une des revendications précédentes, comprenant en outre l'étape suivante consistant à :
configurer l'appareil d'affichage de niveau de remplissage ou l'appareil de mesure de niveau de remplissage (114) au moyen de l'ensemble de données de configuration (104).

16. Procédé selon l'une des revendications précédentes, comprenant en outre l'étape suivante consistant à :
vérifier si ladite au moins une spécification de l'appareil d'affichage de niveau de remplissage ou de l'appareil de mesure de niveau de remplissage contenue dans l'ensemble de données de spécification (102), est satisfaite par la géométrie, la structure, la forme et/ou la fonction de l'appareil d'affichage de niveau de remplissage ou de l'appareil de mesure de niveau de remplissage (114) définie dans l'ensemble de données de configuration (104).

17. Procédé selon l'une des revendications précédentes, comprenant en outre l'étape suivante consistant à :
soumettre et/ou fournir un message d'erreur sur la base de l'analyse de l'ensemble de données de spécification (102) ; et
dans lequel le message d'erreur alerte un utilisateur (118) sur une spécification manquante et/ou incorrecte de l'appareil d'affichage de niveau de remplissage ou de l'appareil de mesure de niveau de remplissage (114) dans l'ensemble de données de spécification (102).

18. Procédé selon l'une des revendications précédentes, comprenant en outre de :
générer, sur la base de l'ensemble de données de configuration (104), une spécification de DAO de l'appareil d'affichage de niveau de remplissage ou de l'appareil de mesure de niveau de remplissage pour la fabrication de l'appareil d'affichage de niveau de remplissage ou de l'appareil de mesure de niveau de remplissage.

19. Dispositif de traitement de données (100) destiné à configurer un appareil d'affichage de niveau de remplissage ou un appareil de mesure de niveau de remplissage (114), dans lequel le dispositif de traitement de données (100) est configuré pour mettre en œuvre des étapes du procédé selon l'une des revendications 1 à 18.

20. Élément de programme qui, lorsqu'il est exécuté sur un dispositif de traitement de données (100), instruit le dispositif de traitement de données (100) à mettre en œuvre des étapes du procédé selon l'une des revendications 1 à 18.

21. Support lisible par ordinateur sur lequel est stocké un élément de programme selon la revendication 20.

22. Utilisation d'un dispositif de traitement de données (100) selon la revendication 19 pour configurer un appareil d'affichage de niveau de remplissage ou un appareil de mesure de niveau de remplissage (114).
